# EUROPEAN PATENT APPLICATION

(11) **EP 4 780 097 A1**
(43) Date of publication of application: **22.07.2026**
(21) Application number: 24870444.7
(22) Date of filing: 11.09.2024
(51) Int. Cl.: H04W 68/02

(54) **PAGING METHOD AND COMMUNICATION APPARATUS**

(30) Priority: 30.09.2023 CN 202311295955
(71) Applicant: HUAWEI TECHNOLOGIES CO., LTD., Shenzhen 518129 (CN)
(72) Inventor: SENG, Shuming, Shenzhen, Guangdong 518129 (CN); LI, Chenwan, Shenzhen, Guangdong 518129 (CN)
(74) Representative: Gill Jennings & Every LLP
(86) International application number: PCT/CN2024/118212
(87) International publication number: WO 2025/066900

(57) **Abstract**

This application discloses a paging method and a communication apparatus, and is applicable to paging for an A-IoT terminal. The paging method includes: A first terminal device determines a first time window, and receives a paging message in the first time window. The first time window is used to page at least one group of terminal devices. The paging message is used to page a first group of terminal devices, the first group of terminal devices are A-IoT terminals, and the paging message includes an identifier of the first group of terminal devices. In this application, the first time window is a time window in which the at least one group of terminal devices receive the paging message, and each terminal device only needs to receive the paging message in a time window corresponding to the terminal device. There is no need to calculate a PO in the time window based on an ID of each terminal device, thereby reducing complexity and reducing power consumption.

## Description

### CROSS-REFERENCE TO RELATED APPLICATIONS

This application claims priority to Chinese Patent Application No. 202311295955.X, filed with the China National Intellectual Property Administration on September 30, 2023 and entitled "PAGING METHOD AND COMMUNICATION APPARATUS", which is incorporated herein by reference in its entirety.

### TECHNICAL FIELD

This application relates to the field of communication technologies, and in particular, to a paging method and a communication apparatus.

### BACKGROUND

When a tag is considered as a new terminal device type for network access, the tag may be paged in a paging manner for a conventional terminal device. For example, a network device may send a paging message to page the tag. During paging for the conventional terminal device, a network device sends a paging message on a specific paging occasion (paging occasion, PO), and the terminal device receives the paging message on the specific PO. The specific PO is obtained by the network device and the terminal device through calculation based on an identifier (identifier, ID) of the terminal device. For the tag, if a PO is calculated in the manner of calculating the PO for the conventional terminal device, processing complexity of the tag is increased, and power consumption is high. For a tag with a weak processing capability, a PO cannot even be calculated.

### SUMMARY

This application provides a paging method and a communication apparatus, to reduce processing complexity of a terminal device and reduce power consumption of the terminal device.

To achieve the foregoing objectives, the following technical solutions are used in embodiments of this application.

According to a first aspect, an embodiment of this application provides a paging method. The method may be performed by a first communication apparatus. The first communication apparatus may be a terminal device, or the first communication apparatus is a component configured to implement a function of the terminal device. For example, the first communication apparatus is a unit/module, a circuit, a chip, or the like in the terminal device. The following describes the method provided in the first aspect by using an example in which the first communication apparatus is a first terminal device. Certainly, the following method provided in the first aspect may alternatively be implemented by a unit/module, a circuit, a chip, or the like in the first terminal device.

The paging method includes: The first terminal device determines a first time window, and receives a paging message in the first time window. The first time window is used to page at least one group of terminal devices. The paging message is used to page a first group of terminal devices, the first group of terminal devices are A-IoT terminals, and the paging message includes an identifier of the first group of terminal devices.

In this solution, the first time window is a time window in which the at least one group of terminal devices receive the paging message, and each terminal device only needs to receive the paging message in a time window corresponding to the terminal device. There is no need to calculate a PO in the time window based on an ID of each terminal device, thereby reducing complexity and reducing power consumption. This is especially applicable to paging for an A-IoT terminal.

In an implementation, that the first terminal device receives the paging message in the first time window includes: The first terminal device continuously or periodically receives the paging message in the first time window.

Considering that time synchronization precision of the A-IoT terminal is lower than time synchronization precision of a conventional terminal device, the A-IoT terminal may miss a paging message from a network device. The paging message is continuously or periodically received in the first time window, so that a case in which paging from a network device cannot be responded to because a paging message for the first terminal device is missed can be avoided, thereby reducing a network access delay.

In an implementation, the method further includes: The first terminal device receives configuration information, where the configuration information indicates the first time window. The configuration information may be used to flexibly configure respective time windows for different terminal devices or different groups of terminal devices.

In an implementation, the configuration information includes start position information of the first time window and/or duration information of the first time window within a cycle. The cycle may be a discontinuous reception cycle (discontinuous reception cycle, DRX cycle) or an extended discontinuous reception cycle (extended discontinuous reception cycle, eDRX cycle). In this solution, the configuration information may be used to configure, for the terminal device, a time window periodically used to receive a paging message.

In an implementation, the configuration information includes a quantity N of time windows within a cycle, and N is an integer greater than or equal to 2.

In an implementation, the first time window is an n^{th} time window in the N time windows within the cycle, and n is an integer greater than or equal to 0.

In this solution, n may be randomly generated. For example, the first terminal device randomly selects a time window from the N time windows to detect the paging message, so that time for detecting the paging message can be staggered from that of another terminal device, thereby reducing a quantity of terminal devices that detect paging messages within same time, and therefore reducing random access congestion within the same time.

In an implementation, the paging message is further used to page a second group of terminal devices, the second group of terminal devices are A-IoT terminals, and the paging message further includes an identifier of the second group of terminal devices. In this solution, a plurality of groups of terminal devices can be paged in a same time window, and this is applicable to a scenario with massive terminal devices.

In an implementation, the paging message further includes a random access parameter, and the random access parameter indicates an available random access resource. The paging message further indicates the available random access resource, so that the first terminal device can avoid using a same random access resource as another terminal device, thereby reducing random access resource congestion and reducing a random access delay of the first terminal device.

In an implementation, the random access parameter includes time domain resource information, where the time domain resource information includes a second offset and/or first time information, the second offset is used to determine a time domain start position of the random access resource, and the first time information indicates a duration of the random access resource; or the time domain resource information includes a coverage level, and there is a mapping relationship between the coverage level and a time domain resource of the random access resource.

In an implementation, the random access parameter includes frequency domain resource information, the frequency domain resource information includes position information of a frequency domain resource used for random access or a third offset, and the third offset is used to determine the frequency domain resource for random access.

In an implementation, the random access parameter includes code domain resource information, and the code domain resource information includes information about a sequence used for random access.

In an implementation, the paging message further includes second time information, and the second time information indicates to ignore a paging message that is received within time indicated by the second time information and that is with a same terminal device identifier. The second time information is carried in the paging message, so that the first terminal device can be prevented from repeatedly responding to the paging message for a plurality of times within a period of time, thereby reducing power consumption.

In an implementation, the paging message further includes a validity identifier, and the validity identifier indicates whether to respond to a received paging message with the same terminal device identifier. The validity identifier is carried in the paging message, so that the first terminal device can clearly determine whether to respond to a paging message of the first terminal device, to avoid repeatedly responding to the paging message for a plurality of times within a period of time, and also avoid waiting to be paged again due to missing the current paging message, thereby reducing a delay of accessing the network device.

According to a second aspect, an embodiment of this application provides a paging method. The method may be performed by a second communication apparatus. The second communication apparatus may be a network device, or the second communication apparatus is a component configured to implement a function of the network device. For example, the second communication apparatus is a unit/module, a circuit, a chip, or the like in the network device. The following describes the method provided in the second aspect by using an example in which the second communication apparatus is a network device. Certainly, the following method provided in the second aspect may alternatively be implemented by a unit/module, a circuit, a chip, or the like in the network device.

The paging method includes: The network device determines a first time window, and sends a paging message in the first time window. The first time window is used to page at least one group of terminal devices. The paging message is used to page a first group of terminal devices, the first group of terminal devices are A-IoT terminals, and the paging message includes an identifier of the first group of terminal devices.

In an implementation, the method further includes: sending configuration information, where the configuration information indicates the first time window.

In an implementation, the configuration information includes start position information of the first time window and/or duration information of the first time window within a cycle.

In an implementation, the configuration information includes a quantity N of time windows within a cycle, and N is an integer greater than or equal to 2.

In an implementation, the paging message is further used to page a second group of terminal devices, the second group of terminal devices are A-IoT terminals, and the paging message further includes an identifier of the second group of terminal devices.

In an implementation, the paging message further includes a random access parameter, and the random access parameter indicates an available random access resource.

In an implementation, the random access parameter includes time domain resource information, where the time domain resource information includes a second offset and/or first time information, the second offset is used to determine a time domain start position of the random access resource, and the first time information indicates a duration of the random access resource; or the time domain resource information includes a coverage level, and there is a mapping relationship between the coverage level and a time domain resource of the random access resource.

In an implementation, the random access parameter includes frequency domain resource information, the frequency domain resource information includes position information of a frequency domain resource used for random access or a third offset, and the third offset is used to determine the frequency domain resource for random access.

In an implementation, the random access parameter includes code domain resource information, and the code domain resource information includes information about a sequence used for random access.

In an implementation, the paging message further includes second time information, and the second time information indicates to ignore a paging message that is received within time indicated by the second time information and that is with a same terminal device identifier.

In an implementation, the paging message further includes a validity identifier, and the validity identifier indicates whether to respond to a received paging message with the same terminal device identifier.

For effective effect of the second aspect, refer to beneficial effect of the first aspect. Details are not described herein again.

According to a third aspect, an embodiment of this application provides a paging method. The method may be performed by a first communication apparatus. The first communication apparatus may be a terminal device, or the first communication apparatus is a component configured to implement a function of the terminal device. For example, the first communication apparatus is a unit/module, a circuit, a chip, or the like in the terminal device. The following describes the method provided in the third aspect by using an example in which the first communication apparatus is a first terminal device. Certainly, the following method provided in the third aspect may alternatively be implemented by a unit/module, a circuit, a chip, or the like in the first terminal device.

The paging method includes: The first terminal device determines a first PO, and receives a paging message on the first PO. The first PO is used to page at least one group of terminal devices. The paging message is used to page a first group of terminal devices, the first group of terminal devices are A-IoT terminals, and the paging message includes an identifier of the first group of terminal devices.

According to a fourth aspect, an embodiment of this application provides a paging method. The method may be performed by a second communication apparatus. The second communication apparatus may be a network device, or the second communication apparatus is a component configured to implement a function of the network device. For example, the second communication apparatus is a unit/module, a circuit, a chip, or the like in the network device. The following describes the method provided in the fourth aspect by using an example in which the second communication apparatus is a network device. Certainly, the following method provided in the fourth aspect may alternatively be implemented by a unit/module, a circuit, a chip, or the like in the network device.

The paging method includes: The network device determines a first PO, and sends a paging message on the first PO. The first PO is used to page at least one group of terminal devices. The paging message is used to page a first group of terminal devices, the first group of terminal devices are A-IoT terminals, and the paging message includes an identifier of the first group of terminal devices.

According to a fifth aspect, an embodiment of this application provides a communication apparatus. The communication apparatus has a function of implementing behavior in the method example according to the first aspect to the fourth aspect. For beneficial effect, refer to related descriptions of the first aspect to the fourth aspect. Details are not described herein again. For example, the communication apparatus may be the first terminal device in the first aspect or the third aspect, or the communication apparatus may be the network device in the second aspect or the fourth aspect. For another example, the communication apparatus may be an apparatus that can support a terminal device in implementing a function required by the method provided in the first aspect or the third aspect. For example, the communication apparatus may be a chip or a chip system in the terminal device. Alternatively, for another example, the communication apparatus may be an apparatus that can support a network device in implementing a function required by the method provided in the second aspect or the fourth aspect. For example, the communication apparatus may be a chip or a chip system in the network device.

In a possible design, the communication apparatus includes a baseband apparatus and a radio frequency apparatus.

In a possible design, the communication apparatus includes a corresponding means (means) or module configured to perform the method according to any one of the first aspect to the fourth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example according to any one of the first aspect to the fourth aspect. For details, refer to detailed descriptions in the method example. Details are not described herein.

According to a sixth aspect, an embodiment of this application provides a communication apparatus. The communication apparatus may be the communication apparatus in the fifth aspect in the foregoing embodiments, or a chip or a chip system disposed in the communication apparatus in the fifth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the first terminal device in the foregoing method embodiments. For example, the communication apparatus may be a terminal device or a functional module in the terminal device, for example, a baseband chip and a radio frequency chip. Alternatively, when the processor reads the computer program, the instructions, or the data, the communication apparatus is enabled to perform the method performed by the network device in the foregoing method embodiments. For example, the communication apparatus may be a network device or a functional module in the network device, for example, a baseband chip and a radio frequency chip.

According to a seventh aspect, an embodiment of this application provides a chip system. The chip system includes a processor, may further include a communication interface, and is configured to implement the method according to any one of the first aspect to the fourth aspect. Optionally, the chip system further includes a memory. The memory is configured to store a computer program (which may also be referred to as code or instructions). The processor is configured to: invoke the computer program from the memory, and run the computer program, to enable a device on which the chip system is installed to perform the method according to any one of the first aspect and the possible implementations of the first aspect, enable a device on which the chip system is installed to perform the method according to any one of the second aspect and the possible implementations of the second aspect, enable a device on which the chip system is installed to perform the method according to any one of the third aspect and the possible implementations of the third aspect, or enable a device on which the chip system is installed to perform the method according to any one of the fourth aspect and the possible implementations of the fourth aspect. The chip system may include a chip, or may include a chip and another discrete component.

According to an eighth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fourth aspect.

In a specific implementation process, the communication apparatus may be a chip, the input circuit may be an input pin, the output circuit may be an output pin, and the logic circuit may be a transistor, a gate circuit, a trigger, any logic circuit, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device, for example, a mobile phone. The interface circuit may be a radio frequency processing chip in the wireless communication device, and a processing circuit may be a baseband processing chip in the wireless communication device.

According to a ninth aspect, an embodiment of this application provides a communication system. The communication system includes a terminal device and a network device. The terminal device is configured to implement a function of the method according to the first aspect, and the network device is configured to implement a function of the method according to the second aspect; or the terminal device is configured to implement a function of the method according to the third aspect, and the network device is configured to implement a function of the method according to the fourth aspect.

According to a tenth aspect, an embodiment of this application provides a computer-readable storage medium. The computer-readable storage medium is configured to store a computer program or instructions. When the computer program or the instructions are run, the method according to any one of the first aspect and the possible implementations of the first aspect is implemented, the method according to any one of the second aspect and the possible implementations of the second aspect is implemented, the method according to any one of the third aspect and the possible implementations of the third aspect is implemented, or the method according to any one of the fourth aspect and the possible implementations of the fourth aspect is implemented.

According to an eleventh aspect, an embodiment of this application further provides a computer program product including instructions. When the computer program product runs on a computer, the method according to any one of the first aspect and the possible implementations of the first aspect is implemented, the method according to any one of the second aspect and the possible implementations of the second aspect is implemented, the method according to any one of the third aspect and the possible implementations of the third aspect is implemented, or the method according to any one of the fourth aspect and the possible implementations of the fourth aspect is implemented.

For beneficial effect of the fifth aspect to the eleventh aspect and the implementations of the fifth aspect to the eleventh aspect, refer to the descriptions of the beneficial effect of any one of the first aspect to the fourth aspect and the possible implementations of the first aspect to the fourth aspect.

### BRIEF DESCRIPTION OF DRAWINGS

FIG. 1 is a diagram of a communication system to which an embodiment of this application is applicable;
FIG. 2 is a diagram of a communication system in which a reader are separated in FIG. 1;
FIG. 3 is a diagram of a PF and a PO in one discontinuous reception cycle according to an embodiment of this application;
FIG. 4 is a schematic flowchart of a paging method 400 according to an embodiment of this application;
FIG. 5 is a diagram of N time windows in one discontinuous reception cycle according to an embodiment of this application;
FIG. 6 is a diagram of N time windows within Tn according to an embodiment of this application;
FIG. 7 is a diagram in which a paging message in one time window carries a plurality of group identifiers according to an embodiment of this application;
FIG. 8 is a diagram in which paging messages on a plurality of POs in one time window carry a plurality of group identifiers according to an embodiment of this application;
FIG. 9 is a diagram of a plurality of POs in one time window according to an embodiment of this application;
FIG. 10 is a diagram of random access resources of terminal devices in a plurality of time windows according to an embodiment of this application;
FIG. 11 is another diagram of random access resources of terminal devices in a plurality of time windows according to an embodiment of this application;
FIG. 12 is a schematic flowchart of a paging method 1200 according to an embodiment of this application;
FIG. 13 is a diagram of a structure of a communication apparatus according to an embodiment of this application; and
FIG. 14 is a diagram of another structure of a communication apparatus according to an embodiment of this application.

### DESCRIPTION OF EMBODIMENTS

Embodiments of this application provide a paging method, which may be used to page an internet of things (internet of things, IoT) terminal. IoT includes an ambient internet of things (ambient IoT, A-IoT), a narrowband internet of things (narrowband internet of things, NB-IoT), and the like. An IoT technology is widely applied to various industry fields. For example, the IoT technology may be applied to scenarios such as logistics, warehousing, industrial manufacturing, identity identification, or environment monitoring. IoT is implemented based on a radio frequency identification (radio frequency identification, RFID) technology. The RFID technology is a non-contact communication technology implemented by using a radio frequency communication manner. A principle of the RFID technology is that a reader/reader (reader) and a tag (tag) do not need to contact each other, and data communication is implemented by using radio waves.

Technical solutions provided in embodiments of this application may be applied to an IoT system, for example, an A-IoT system, or may be applied to a communication system related to the 3rd generation partnership project (the 3rd generation partnership project, 3GPP), for example, a long term evolution (long term evolution, LTE) communication system, a 5th generation (sixth generation, 5G) mobile communication system, a future mobile communication system, or another similar communication system. The another similar communication system may include a wireless fidelity (wireless fidelity, Wi-Fi) system, an internet of vehicles (vehicle-to-everything, V2X) system, and the like.

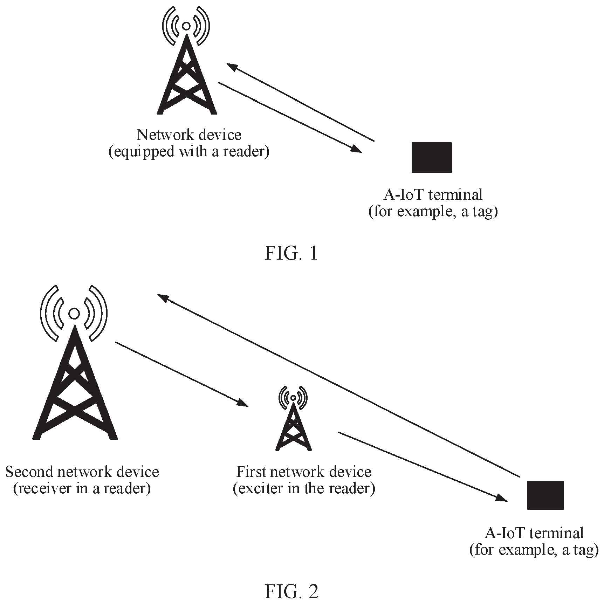

FIG. 1 is a diagram of a communication system according to an embodiment of this application. The communication system includes at least one terminal device and at least one network device. In FIG. 1, an example in which the at least one terminal device is one terminal device and the at least one network device is one network device is used. A network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

Any device that can perform data communication with the network device may be considered as a terminal device. The terminal device is also referred to as a terminal, a terminal apparatus, a user equipment (user equipment, UE), a mobile station, a mobile terminal, or the like. For example, the terminal device may be a mobile phone, a computer, a mobile internet device (mobile internet device, MID), a wearable device, a virtual reality (virtual reality, VR) device, an augmented reality (augmented reality, AR) device, a robot arm, a camera, a robot, a smart home device (for example, a television, an air conditioner, a robot vacuum cleaner, a sound box, or a set-top box), a relay (relay), customer premises equipment (customer premises equipment, CPE), or a device having a function of a tag device. For example, the terminal device may be a tag or the like in IoT/A-IoT. In FIG. 1, an example in which the terminal device is an A-IoT terminal is used.

The tag may be referred to as an RFID tag or an electronic tag, or may be referred to as an A-IoT terminal or an A-IoT device, and is usually attached to an object to identify a target object. The tag may receive a radio frequency signal from a reader. With energy obtained from an induced current, the tag may send information stored in a chip inside the tag, or the tag may actively send a signal at a specific frequency to the reader. The reader reads the information from the tag. A design of the tag is simple. Application layer signaling and air interface signaling are designed in an integrated manner, featuring low power consumption. Tags are classified into three types: an active tag, a passive tag, and a semi-active/semi-passive tag. The active tag is also referred to as an active tag (active tag), the passive tag is also referred to as a passive tag (passive tag), and the semi-active/semi-passive tag is also referred to as a semi-passive tag (semi-passive tag). The active tag/active tag is equipped with a power supply, and uses a communication manner of actively generating a carrier, that is, may actively send a signal to the reader, without a need to obtain, based on a received signal, energy for sending the signal. The passive tag/passive tag is not equipped with a module such as a power supply, or the power supply module has a small amount of electricity. The passive tag may use a backscatter (backscatter)-based communication manner, so that energy can be obtained from an environment, and a signal can be sent by using the energy. The passive tag may work in a backscatter communication scenario. For example, the passive tag obtains energy by backscattering a signal from the reader to transmit data. The semi-active/semi-passive tag integrates advantages of the active tag and the passive tag, and may be used as a special type of marker. Usually, the semi-active/semi-passive tag is in a sleep state, may not work, and does not send a signal to the outside. The semi-active/semi-passive tag is activated and starts to work only when entering an activation signal range of a low-frequency activator. The tag in embodiments of this application may be an active tag, a passive tag, a semi-active/semi-passive tag, or the like.

In embodiments of this application, the tag may be used as a terminal device. Correspondingly, the terminal device in this application may be of the following three types: a passive terminal, which has no energy storage, cannot independently generate a signal, and transmits a signal through backscattering; a semi-passive terminal, which has energy storage, but cannot independently generate a signal, and transmits a signal through backscattering, where energy stored by the semi-passive terminal can amplify a backscattered signal; and an active terminal, which has energy storage, can independently generate a signal, and has an active radio frequency element for transmission.

Both the tag device and the reader may be implemented based on an infrastructure in a cellular network, or the tag device and the reader may be devices in the cellular network. For example, a function of the reader may be implemented by a network device or a terminal device, and the tag device may be implemented by a terminal device in the cellular network. For example, the tag device may be an internet of things terminal with extremely low power consumption and extremely low complexity. When the terminal device has a function of the tag device, non-contact data communication may be performed between the terminal device and a network device or another terminal device.

If the various terminal devices described above are located on a vehicle (for example, placed/mounted in the vehicle), the terminal devices may be all considered as vehicle-mounted terminal devices. The vehicle-mounted terminal device may be a vehicle-mounted module, a vehicle-mounted assembly, a vehicle-mounted component, a vehicle-mounted chip, or a vehicle-mounted unit that is built in the vehicle as one or more components or units. The vehicle-mounted terminal device may alternatively be an entire vehicle device, a vehicle-mounted module, a vehicle, an on-board unit (on-board unit, OBU), a roadside unit (roadside unit, RSU), an in-vehicle infotainment system (also referred to as an in-vehicle sending unit) (telematics box, T-box), a chip, a system on chip (system on chip, SoC), or the like. The chip or the SoC may be mounted in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be mounted in the terminal device. A specific technology and a specific device form that are used by the terminal device are not limited in embodiments of this application. For example, in embodiments of this application, the terminal device may be in a tag form, or may be in another terminal form.

The network device in embodiments of this application is mainly an access network device. Therefore, in the following descriptions, unless otherwise specified, the "network device" is a radio access network (radio access network, RAN) device, and may be briefly referred to as an access network device. A RAN may be a 3GPP-related cellular system, for example, an LTE system, a new radio (new radio, NR) system, or a future-oriented evolved system (for example, a 6G mobile communication system). Alternatively, the RAN may be an open access network (open RAN, O-RAN or ORAN), a cloud radio access network (cloud radio access network, CRAN), a virtualized radio access network (virtualized RAN, vRAN), or the like. Alternatively, the RAN may be a communication system that integrates two or more of the foregoing systems. The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be an RSU in a V2X technology, an access node in a Wi-Fi system, or the like.

Alternatively, the RAN node may be a module or unit that completes some functions of the base station. Alternatively, a plurality of RAN nodes cooperate to assist the terminal device in implementing wireless access, and different RAN nodes each implement some functions of the base station. For example, the RAN node may be a central unit (central unit, CU), a distributed unit (distributed unit, DU), or a radio unit (radio unit, RU). In different systems, the CU, the DU, or the RU may have different names, but a person skilled in the art may understand meanings thereof. For example, in an ORAN system, the CU may also be referred to as an O-CU (open CU), the DU may also be referred to as an O-DU, a CU-CP may also be referred to as an O-CU-CP, a CU-UP may also be referred to as an O-CU-UP, and the RU may also be referred to as an O-RU. For ease of description, the CU, the CU-CP, the CU-UP, the DU, and the RU are used as examples for description in this application. The CU and the DU may be configured based on protocol layer functions of a wireless network that are implemented by the CU and the DU. Protocol layers separately configured for the CU and the DU are not limited in embodiments of this application. Any one of the CU, the DU, and the RU in this application may be implemented by using a software module, a hardware module, or a combination of a software module and a hardware module.

In embodiments of this application, the reader may be built in the network device. When the terminal device is a tag, the tag may communicate with the network device through a Uu interface, as shown in FIG. 1. Functions of the reader may be further separated. The reader is divided into a receiver (receiver) and an exciter (helper). The receiver is also referred to as a receive end or a receiving unit, and the exciter is also referred to as an excitation end or an excitation unit. The excitation unit is equivalent to a transmitter in the reader, and the receiving unit is equivalent to a receiver in the reader. When the reader is implemented in a separated architecture, different entities of the reader may be deployed on different network devices, as shown in FIG. 2. In FIG. 2, the exciter is deployed on a first network device, and is configured to perform a sending function of the reader; and the receiver is deployed on a second network device, and is configured to perform a receiving function of the reader.

In embodiments of this application, an apparatus configured to implement a function of the network device may be the network device, or may be an apparatus that can support the network device in implementing the function, for example, a chip system or a combined device or component that can implement the function of the network device. The apparatus may be mounted in the network device. A specific technology and a specific device form that are used by the network device are not limited in embodiments of this application.

With development of IoT technologies, tags are widely used in various industry fields. For example, the tags may be applied to transportation management, logistics management, industrial control, identity identification, environment detection, and the like of warehouse materials. As a typical application, logistics management is implemented by inventorying physical tags. The tags are inventoried, that is, a reader performs an inventory operation on some tags within a coverage area, to obtain identifiers of the tags within the coverage area of the reader. Usually, the reader broadcasts a select (select) message, where the select message includes a range of the tags that need to be inventoried. After receiving the select message, any tag determines whether an identifier of the tag belongs to the select message or a tag identifier range included in the select message. If the identifier belongs to the select message or the tag identifier range included in the select message, the tag accesses the reader. For the tag, when the reader broadcasts the select message is not known. To avoid missing the select message, usually, a receiver of the tag is always on, which is energy-consuming.

As a type of UE, the tag may also use a paging manner of a conventional UE. It may be understood that, when the UE is in a radio resource control (radio resource control, RRC) idle (idle) state or an RRC inactive (inactive) state, if a core network or a base station needs to send downlink data to the UE, the core network or the base station first sends a paging (paging) message to the UE to page the UE. After receiving the paging message, the UE initiates an RRC connection establishment process to receive the downlink data. When the UE is in the RRC idle state, a network device may send a paging message (which may also be referred to as paging for short) on a specific PO in a specific paging frame (paging frame, PF) in a paging cycle. Correspondingly, the UE receives/monitors (monitors) the paging message within the specific PO.

In an implementation, if the paging message includes an identifier (identifier, ID) of a specific UE, the UE is paged. Then the UE may respond to the paging message and initiate random access. A process in which the UE responds to the paging message is as follows: If a UE ID included in a paging record matches a UE ID allocated by upper layers (if the *ue-Identity* included in the *PagingRecord* matches the UE identity allocated by upper layers), the UE identifier, accessType (if present), and a paging cause (if determined) may be forwarded to the upper layers (forward the *ue-Identity, accessType* (if present) and paging cause (if determined) to the upper layers). Otherwise, the UE ID and accessType (if present) may be forwarded to the upper layers (forward the *ue-Identity* and *accessType* (if present) to the upper layers). Alternatively, if the UE ID included in the paging record matches the UE ID allocated by the upper layers and the upper layers indicate support of the paging cause (if upper layers indicate the support of paging cause), the UE identifier, accessType (if present), and the paging cause (if determined) may be forwarded to the upper layers. That the UE does not respond to the paging message may be that the UE discards the paging message and does not initiate random access.

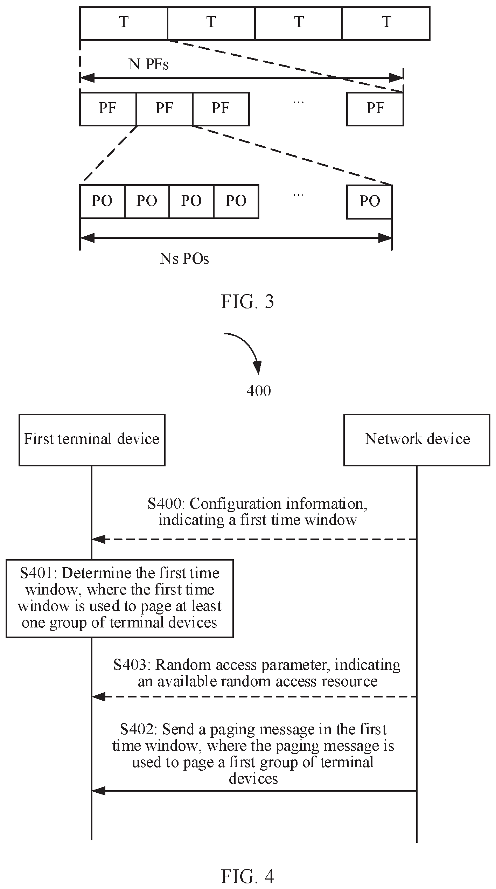

To reduce power consumption, a discontinuous reception (discontinuous reception, DRX) mechanism is introduced in the LTE technology. The DRX mechanism includes a DRX cycle (cycle). The UE periodically "wakes up" for a period of time in the DRX cycle, and may remain in a "sleep" state in other time in the DRX cycle, to reduce power consumption. The UE configured with DRX "wakes up" on a paging occasion (paging occasion, PO) included in the DRX cycle to receive a paging message. To further reduce power consumption, an extended discontinuous reception (extended DRX, eDRX) mechanism is introduced in the NR technology based on the DRX mechanism. Compared with DRX, eDRX has a longer DRX cycle. That is, UE may periodically "sleep" for longer time and then "wake up" once. One eDRX cycle includes one paging transmission window (paging transmission window, PTW), the PTW includes one or more PFs, and one PF includes a plurality of POs, as shown in FIG. 3. T in FIG. 3 represents one eDRX cycle. In FIG. 3, that one eDRX cycle includes N PFs is used as an example, and N is a positive integer. In addition, in FIG. 3, that one PF includes Ns POs is used as an example, and Ns is a positive integer. It should be noted that the DRX cycle and the eDRX cycle may be interchanged in embodiments of this application.

A UE or a network device may calculate a position of a PO based on an ID of the UE. A system frame number (system frame number, SFN) of a PF in which a PO for receiving a paging message by the UE is located satisfies (*SFN + PF_{offset}*) mod T = (*T* div *N*)×(*UE_ID* mod *N*). T is a length of an eDRX cycle, "div" indicates division, and *"T* div *N"* is equivalent to equally dividing the eDRX cycle into N parts. mod represents a modulo operation. *UE_ID* is the ID of the UE, and *UE_ID* may be a 5G-S-temporary mobile subscriber identity (5G-S-temporary mobile subscriber identity, 5G-S-TMSI) mod (1024). *UE_ID* mod *N* indicates taking a (*UE_ID* mod *N*)^{th} part in the N parts. *PF_{offset}* represents a PF offset.

An index i_s of the PO satisfies i_s = floor(*UE_ID*/*N*) *mod Ns. Ns* is a quantity of POs included in one PF.

The paging message sent by the network device carries IDs of one or more UEs to be paged. However, currently, a quantity of UE IDs that can be carried in the paging message is limited. For example, in the NR technology, a quantity of UE IDs that can be carried in a paging message does not exceed 32. To page more UEs at the same time, a group paging mechanism is provided. The group paging mechanism is mainly used for a multimedia broadcast multicast service (multimedia broadcast multicast service, MBMS)/multicast broadcast service (multicast broadcast service, MBS). The MBS includes, for example, a live streaming service, a public safety service, and a batch software update service. In the group paging mechanism, a paging message carries an ID of a group of UEs. For example, the group ID of the UE may be a temporary mobile group identity (temporary mobile group identity, TMGI).

In conventional UE paging, a network device calculates, based on a UE ID, a PO for receiving a paging message, and sends the paging message on the calculated PO. A terminal device calculates, based on the UE ID, a PO for receiving the paging message, and receives the paging message on the calculated PO. For a tag, an occasion for sending a paging message by a network device is unknown. To prevent the paging message from being missed, a receiver of the tag is always on, which is energy-consuming. If the tag calculates a PO in a manner in which the UE calculates the PO, processing complexity of the tag is increased, and power consumption is high. However, the tag is usually used because of a low power consumption characteristic of the tag. Therefore, paging of the conventional UE is not applicable to paging of the tag. In addition, crystal oscillator precision of the tag is lower than that of the UE, in other words, time synchronization precision of the tag is lower than that of the UE. In this case, there is a time deviation between a PO calculated by the tag based on a tag ID and a PO calculated by the network device based on the tag ID. As a result, the tag misses the paging message from the network device, and does not subsequently access the network, affecting a normal service of the tag.

In view of this, a paging method in embodiments of this application is provided. In embodiments of this application, a plurality of terminal devices receive a paging message in a same time window, and the time window is used to page the plurality of terminal devices. Each terminal device does not need to calculate a PO in the time window based on an ID of the terminal device, thereby reducing complexity. The paging method provided in embodiments of this application is particularly applicable to paging of an A-IoT terminal device (for example, a tag), and certainly is also applicable to paging of another type of terminal device.

The following describes the paging method provided in embodiments of this application with reference to accompanying drawings. In embodiments of this application, a time window may also be referred to as a paging time window or a paging transmission window, or may have another name. A discontinuous reception cycle may be a DRX cycle in LTE or NR, or may be an eDRX cycle in NR. Receiving a paging message may be referred to as detecting a paging message or monitoring a paging message.

In embodiments of this application, the paging message may alternatively be a paging message, or may be select signaling. It may be understood that the select signaling is used to page a tag. Correspondingly, if a terminal device A is paged, when the paging message is a paging message, an identifier of the terminal device A included in the paging message may be an ID of the terminal device A. When the paging message is select signaling, the paging message may include mask (mask) information, and the mask (mask) information is used to screen out the terminal device A. For example, a mask carried in the select signaling is 4-bit "0000", and a mask of the terminal device A is "00001111". Because the first four bits in "00001111" are the mask carried in the select signaling, the terminal device A meets a selection range of the select signaling, and the terminal device A may respond to the select signaling. Certainly, the select signaling may also carry an identifier/group identifier of a terminal device; or the select signaling includes a filter, and the filter is used to screen out a to-be-paged terminal device. The filter may indicate an identifier/group identifier of a terminal device, and is used to page a terminal device or a group of terminal devices. Alternatively, the filter may indicate a type of a terminal device, that is, is used to page a type of terminal device. It may be understood that the filter is used to screen out the terminal device, and the filter may also be referred to as filtering information. A specific name of the filter is not limited in embodiments of this application.

In embodiments of this application, detecting a paging message within a time window includes detecting a paging early indication (paging early indication, PEI) within the time window. That a network device configures a time window for a terminal device is equivalent to that the network device configures a monitoring occasion of a PEI for the terminal device. The PEI may carry a (sub)group identifier (subgrouping). If the terminal device detects the PEI, and the terminal device belongs to a subgroup indicated by the PEI, the terminal device detects a paging message on a PO associated with the terminal device. If the terminal device does not detect the PEI, or the terminal device belongs to a group indicated by the PEI, the terminal device does not need to detect a paging message on a PO associated with the terminal device. The PEI may also carry a filter, to screen out a terminal device.

In embodiments of this application, one or more of a duration, a time offset, and a cycle may be (pre)configured or predefined. In addition, specific unit sizes of the duration, the time offset, and the cycle are not limited in embodiments of this application. For example, a unit of the duration, the time offset, or the cycle may be a slot, a physical downlink control channel (physical downlink control channel, PDCCH) cycle, a preamble, an SFN, or a hyper system frame number (HSFN, hyper system frame number). For example, one duration, one time offset, or one cycle may be at least one slot, at least one PDCCH cycle, at least one preamble, or at least one system frame. For another example, a unit of the duration or the time offset may be a time unit. For example, one duration or one time offset may be 10 ms, 20 ms, 30 ms, or the like.

The following describes the paging method by using an example in which the paging method provided in embodiments of this application is performed by a network device and a first terminal device. Steps performed by the network device may be implemented by a RAN device, or may be implemented by a component (for example, a module such as a baseband chip, or another processing unit or processor) in the RAN device. For example, the network device may be the network device in FIG. 1 or FIG. 2, or may be a chip (system) in the network device in FIG. 1 or FIG. 2. Steps performed by the first terminal device may be implemented by a terminal device, or may be implemented by a component (for example, a module such as a chip, a processing unit, or a processor) in the first terminal device. The first terminal device may be the terminal device shown in FIG. 1 or FIG. 2, or may be a chip (system) in the terminal device in FIG. 1 or FIG. 2. The first terminal device may be a UE, or may be an A-IoT terminal device. For example, the first terminal device may be a tag.

FIG. 4 is a schematic flowchart of a paging method 400 according to an embodiment of this application. In FIG. 4, the method is described from a perspective of interaction between a network device and a first terminal device. It should be understood that the paging method 400 may alternatively be implemented by another apparatus, for example, a chip or a communication apparatus that has a communication function. A first time window below is a time window. The following uses the first time window as an example. When a plurality of time windows are present, each time window is similar to the first time window. As shown in FIG. 4, a procedure of the paging method 400 includes the following steps.

S401: The first terminal device determines the first time window, where the first time window is used to page at least one group of terminal devices.

The first time window may be used to page the at least one group of terminal devices, or the first time window is a time window in which the at least one group of terminal devices receive a paging message. For example, the first time window may be used to page a terminal device group A and a terminal device group B. It may be considered that terminal devices in different groups may receive paging messages in a same time window, or one time window includes respective POs of a plurality of groups of terminal devices. A group of terminal devices may be one terminal device, or may be a plurality of terminal devices. If a group of terminal devices includes a plurality of terminal devices, different terminal devices may receive paging messages in a same time window. The first time window is used as an example. The first time window is a time window in which a plurality of terminal devices receive paging messages, and the first time window includes respective POs of the plurality of terminal devices. For example, the first time window may be used to page a terminal device A and a terminal device B, and the first time window includes a PO of the terminal device A and a PO of the terminal device B.

In embodiments of this application, there is a correspondence between a terminal device group and a time window. For example, there are a plurality of time windows (including a time window 1 and a time window 2) and a plurality of terminal device groups (including a terminal device group A, a terminal device group B, and a terminal device group C). For another example, the terminal device group A corresponds to the time window 1, and the time window 1 is used to page the terminal device group A; and the terminal device group B corresponds to the time window 2, and the time window 2 is used to page the terminal device group B. For another example, the terminal device group A corresponds to the time window 1, and the time window 1 is used to page the terminal device group A; and the terminal device group B and the terminal device group C correspond to the time window 2, and the time window 2 is used to page the terminal device group B and the terminal device group C. Any terminal device may determine, based on a group to which the terminal device belongs, a time window corresponding to the terminal device, to receive a paging message in the determined time window. For example, a terminal device group A corresponds to the first time window, the first terminal device is a terminal device in the terminal device group A, and the first terminal device may receive a paging message in the first time window (this is used as an example in this embodiment of this application). The terminal device receives the paging message in the time window corresponding to the terminal device, and does not need to calculate, based on an ID of the terminal device, a PO for receiving the paging message in the time window. Therefore, processing complexity can be reduced, and energy consumption of the terminal device can be reduced. This is especially applicable to an A-IoT terminal (for example, a tag).

The first time window may be configured by the network device for the first terminal device, or the first time window may be configured by the network device for a terminal device group (for example, referred to as a first group of terminal devices) to which the first terminal device belongs. For example, before S401, the network device may further perform S400.

S400: The network device sends configuration information to the first terminal device, where the configuration information indicates the first time window. Correspondingly, the first terminal device receives the configuration information, and may determine the first time window.

The configuration information indicates the first time window, which may mean that the configuration information is used to configure the first time window. The configuration information may directly indicate the first time window, or may indirectly indicate the first time window. Indication manners include, but are not limited to, the following two manners.

**Manner** A: The configuration information is used to configure a start position of the first time window and/or a duration of the first time window within a period of time. For example, the configuration information is used to configure a start position of the first time window and/or a duration of the first time window within a cycle.

In an example, the configuration information may include start position information of the first time window within the cycle, indicating the start position of the first time window within the cycle. The cycle may be a discontinuous reception cycle, for example, a DRX cycle or an eDRX cycle. Alternatively, the cycle may be a cycle configured by the network device. The start position information of the first time window may be an absolute start position of the first time window. For example, the start position information of the first time window is an offset (offset) of time information relative to a reference start position (for example, T0). The offset may be n, where n is time-related information. For example, n is a system frame number offset value. Assuming that n=10, and a system frame number corresponding to T0 is 1, the start position of the first time window is SFN=T0+n=11. For another example, n is absolute time. Assuming that n=10 ms, the start position of the first time window is a time position that is 10 ms after T0. For another example, the start position information of the first time window may alternatively be information indicating the start position of the first time window. For example, the start position information of the first time window is a proportion m of the first time window in a duration T. Assuming that m=1/3, the start position of the first time window is a position of (1/3)×T.

In this case, the duration of the first time window may be preconfigured or predefined. For example, the duration of the first time window is at least one frame or at least one slot. For another example, the duration of the first time window may be an absolute duration. For example, the duration of the first time window is several seconds, several milliseconds, or the like. The first terminal device receives the configuration information, determines the start position of the first time window based on the start position information of the first time window, and then determines a position of the first time window based on the duration of the first time window.

In another example, the configuration information may include duration information of the first time window within the cycle. For example, if a duration of a time window is measured in a slot, and the configuration information includes M, a length of the first time window is M slots, where M is a positive integer. In this case, the start position of the first time window may be preconfigured or predefined. For example, the start position of the first time window is a start position of a discontinuous reception cycle (DRX cycle or eDRX cycle). For another example, the start position of the first time window is at a first offset from a start position of a discontinuous reception cycle (DRX cycle or eDRX cycle). The first terminal device receives the configuration information, determines the start position of the first time window, and then determines the first time window based on the start position of the first time window.

The first offset may be (pre)configured. The first offset and the duration information of the first time window may be carried in one piece of signaling. For example, the network device sends the configuration information, where the configuration information includes the duration information of the first time window and the first offset. Alternatively, the first offset and the duration information of the first time window are independently configured. For example, the network device sends the configuration information, where the configuration information includes the duration information of the first time window, and the network device further sends information about the first offset.

In still another example, the configuration information may include start position information of the first time window and duration information of the first time window within the cycle, which is more flexible.

Optionally, in the manner A, the configuration information may further include length information of the cycle. For example, the configuration information includes T, and T is a length of the cycle.

**Manner B:** The configuration information is used to configure a quantity N of time windows within a cycle, and the first time window is one of the time windows within the cycle. N is an integer greater than or equal to 2. One cycle may be one DRX cycle, or may be one eDRX cycle, or may be a cycle configured by the network device.

The configuration information may include the quantity N of time windows within the cycle. The first time window is one of the N time windows. The first terminal device receives the configuration information, and may determine the first time window based on the configuration information. For example, the first time window may be an n^{th} time window in the N time windows, where n is an integer greater than or equal to 0 and less than N.

In an implementation, the first terminal device may generate a random number n, and determine, based on the random number n, that the n^{th} time window in the N time windows is the first time window, where n is less than or equal to N. The first terminal device randomly selects a time window from the N time windows as the first time window, so that time for detecting the paging message can be staggered from that of another terminal device, thereby reducing a quantity of terminal devices that detect paging messages within same time, and therefore reducing random access congestion within the same time.

In another implementation, n is related to identification information of the first terminal device. For example, the identification information of the first terminal device is a UE ID, and n=UE ID mod N. For another example, the identification information of the first terminal device is a filter, and n=filter mod N.

In another implementation, n is related to identification information of the terminal device group to which the first terminal device belongs. For example, n=group identifier mod N.

Alternatively, the configuration information may include the quantity N of time windows within the cycle and n. The first terminal device receives the configuration information, and determines that the first time window is an n^{th} time window in the N time windows within the cycle. If the quantity N of time windows within the cycle is preconfigured or predefined, the first terminal device may determine, based on the foregoing two implementations of n, that the first time window is the n^{th} time window in the N time windows within the cycle. In this case, the network device does not need to send the configuration information. Therefore, S400 is not a mandatory step, and is shown by using a dashed line in FIG. 4.

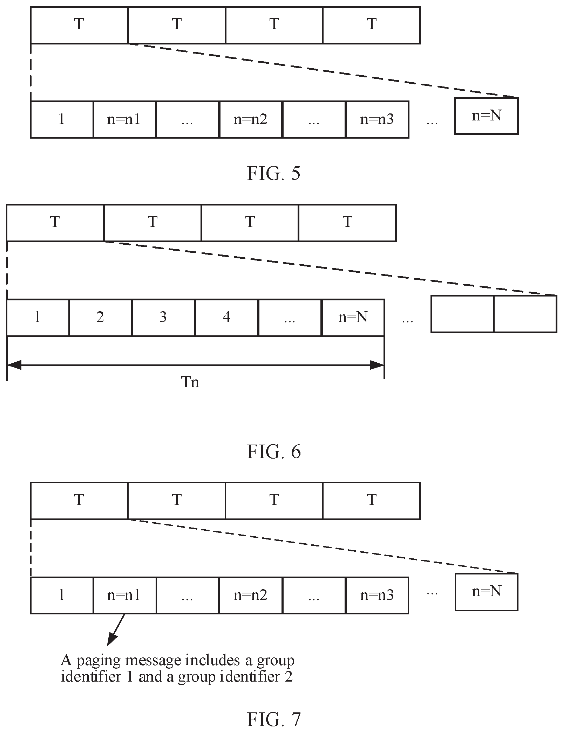

For example, FIG. 5 shows N time windows in one discontinuous reception cycle. "T" in FIG. 5 indicates a length of one discontinuous reception cycle. If n=n3, the first time window is a time window shown by a shadow part. When the configuration information includes N, the first terminal device may determine that a length of one time window is x=T/N. If x is not an integer, rounding down is performed on T/N. The first terminal device may determine a start position of the first time window based on x and a start position of the discontinuous reception cycle, to determine the first time window.

Optionally, in the manner B, the configuration information may further include length information of the cycle. For example, the configuration information includes T, and T is a length of the cycle.

In the manner B, an example in which the configuration information is used to configure the quantity N of time windows within the cycle is used. In an implementation, the network device may configure a quantity N of time windows within a period of time, and the first time window is one of the N time windows within the period of time. A length Tn of the period of time is less than the length T of the cycle. For example, FIG. 6 shows N time windows within Tn. "T" in FIG. 6 indicates the length of the cycle. A start position of Tn may be the same as a start position of the cycle (this is used as an example in FIG. 6). A second offset may also exist between the start position of Tn and the start position of the cycle, and the second offset may be (pre)configured. In this case, the configuration information may include Tn and N. The first terminal device receives the configuration information, where it is considered by default that the start position of Tn is the same as the start position of the cycle. Alternatively, the configuration information may include Tn, N, and the second offset.

In embodiments of this application, a type of signaling that carries the configuration information is not limited. For example, the configuration information may be carried in one or more of radio resource control (radio resource control, RRC) signaling, downlink control information (downlink control information, DCI), or a MAC control element (control element, CE), or the configuration information is carried in one or more fields in the RRC signaling, the DCI, or the MAC CE. The configuration information may alternatively be carried in one piece of signaling or a plurality of pieces of signaling. For example, the configuration information includes the start position information of the first time window and the duration information of the first time window. That the network device sends the configuration information may be that the network device sends first signaling and second signaling, where the first signaling includes the start position information of the first time window, and the second signaling includes the duration information of the first time window.

The network device may broadcast the configuration information. For example, the configuration information may be carried in system information (system information, SI), a system information block (system information block, SIB), a master information block (master information block, MIB), or the like. Any terminal device receives the configuration information, and may determine, based on the configuration information and an identifier of the terminal device, a time window that belongs to the terminal device. For example, if an identifier of the first terminal device is a UE ID, an SFN corresponding to the first time window satisfies (SFN+PF_offset) mod T=(T div N)×(UE_ID mod N). For another example, if an identifier of the first terminal device is a filter, an SFN corresponding to the first time window satisfies (SFN+PF_offset) mod T=(T div N)×(filter mod N). T is a discontinuous reception cycle, N is a quantity of time windows within T, and PF_offset is an offset (for example, the first offset) used to determine the first time window.

When the network device needs to page a group of terminal devices, the network device also determines a time window corresponding to the group of terminal devices. For example, the network device needs to page the first group of terminal devices, and a time window corresponding to the first group of terminal devices is the first time window. The network device also determines the first time window. A method for determining the first time window by the network device is similar to the method for determining the first time window by the first terminal device. Details are not described herein again.

S402: The network device sends a paging message in the first time window, where the paging message is used to page the first group of terminal devices.

Correspondingly, the first terminal device receives the paging message in the first time window. The first time window is used to page the first group of terminal devices. When the network device needs to page the first group of terminal devices, the network device may send the paging message in the first time window. The paging message is used to page the first group of terminal devices. For example, the paging message includes an identifier of the first group of terminal devices. Correspondingly, the first terminal device belongs to the first group of terminal devices, and the first terminal device may receive the paging message in the first time window. That the paging message in the first time window includes the identifier of the first group of terminal devices may be understood as that paging messages on all POs in the first time window include the identifier of the first group of terminal devices, in other words, the paging messages on all the POs in the first time window carry a same group identifier.

In embodiments of this application, a group of terminal devices may also be a type of terminal device. For example, that the first time window is used to page at least one group of terminal devices may be replaced with that the first time window is used to page at least one type of terminal device. An identifier of a terminal device/terminal device group carried in a paging message may also be understood as being used to screen out the terminal device. From this perspective, that the paging message includes the identifier of the first group of terminal devices may be replaced with that the paging message includes first screening information/a filter (filter), where the first screening information/filter (filter) is used to screen out the first group of terminal devices.

A grouping/classification manner of terminal devices is not limited in embodiments of this application. A specific grouping/classification manner may vary based on different terminal devices. The following uses examples for description.

An example in which the terminal device is a conventional terminal device, for example, a UE is used. In a paging process, UEs may be grouped/classified based on services supported by the UEs. For example, one type of service corresponds to one group of UEs, in other words, UEs that support one type of service are a group of UEs. The services supported by the UEs include, for example, inventory, a read operation, a write operation, sensing, and positioning. Alternatively, UEs are classified based on processing capabilities of the UEs. For example, UEs whose processing capabilities are within a capability range are a group of UEs.

An example in which the terminal device is an IoT terminal or an A-IoT terminal, for example, a tag is used. Tags that meet some specific conditions may be classified into a group/type. A type of A-IoT terminals or a group of A-IoT terminals correspond to a same filter. The filter may be a group identifier, a mask, a tag ID/UE ID, type/category information, a storage area field/content (to be described below), or the like.

A type of the A-IoT terminal is related to one or more of the following: a factory manufacturer, an operator, a current battery level, an internal sensor type, a device type, or the like of the A-IoT terminal. For example, A-IoT terminals are classified based on types of devices in which the A-IoT terminals are located. For example, A-IoT terminals mounted on air conditioners are a group of A-IoT terminals, and A-IoT terminals mounted on remote controls are a group of A-IoT terminals. Correspondingly, a filter is a device mounted on the A-IoT terminal. For another example, A-IoT terminals are classified based on operators to which the A-IoT terminals belong. For example, A-IoT terminals used by an operator A are a group of tags, and A-IoT terminals used by an operator B are a group of tags. Correspondingly, a filter is an operator. For another example, tags are classified based on geographical area ranges in which A-IoT terminals are deployed. For example, A-IoT terminals deployed in a campus A are a group of A-IoT terminals, and A-IoT terminals deployed in a campus B are a group of A-IoT terminals. Correspondingly, a filter is a campus.

A-IoT terminals are classified based on storage area fields. Correspondingly, a filter is a storage area field. For example, the A-IoT terminal is a tag. It may be understood that the tag has four storage areas: a user data area (user memory), a factory number (electronic product code, EPC) storage area, a reserved (reserved) storage area, and a tag identifier (tag identifier, TID) storage area. The filter may be a storage area field or content in the storage area. For example, the filter is "00"+"00000000"+"1111111111...111", where "00" indicates the user memory, "00000000" indicates a specific position (for example, a position corresponding to a first byte) in the user memory, and "1111111111...111" indicates data content to be screened out. In this case, tags corresponding to a filter that indicates that content stored in the first byte of the user memory is "1111111111...111" are a type of tag.

The foregoing classification manners of terminal devices are merely examples, and the classification manner of terminal devices is not limited in embodiments of this application. For example, terminal devices may be classified based on services/operations supported by the terminal devices. For example, A-IoT terminals that support an inventory service are a group of A-IoT terminals, A-IoT terminals that support a read operation are a group of A-IoT terminals, and A-IoT terminals that support a write operation are a group of A-IoT terminals. The foregoing plurality of classification manners of A-IoT terminals may be combined with each other. For example, A-IoT terminals are classified based on enterprises that use the A-IoT terminals and geographical area ranges in which the A-IoT terminals are deployed.

If the network device needs to page a specific group of terminal devices/type of terminal device, the network device may send a paging message in a time window corresponding to the group of terminal devices/type of terminal device. For example, the network device needs to page the first group of terminal devices. The network device may send a paging message in the first time window, and the paging message includes an identifier (briefly referred to as a first group identifier) of the first group of terminal devices. Each terminal device receives the paging message in a time window corresponding to the terminal device. If the terminal device finds that the received paging message is used to page the terminal device, the terminal device responds to the paging message. For example, the first terminal device may receive the paging message in the first time window. If the first terminal device determines that the first terminal device belongs to a terminal device group indicated by the group identifier carried in the paging message, the first terminal device determines that the received paging message is used to page the first terminal device. In an implementation, the network device may determine, based on a quantity of terminal devices in each time window, whether the paging message needs to carry a UE ID, where a UE group ID is still a filter. For example, if the quantity of terminal devices is small, the paging message may carry the UE ID; or if the quantity of terminal devices is large, the paging message may carry the UE group ID or the filter. Certainly, the paging message may alternatively carry the UE ID and the UE group ID (or the filter).

Each terminal device does not need to calculate, based on the ID, an occasion for receiving the paging message, so that processing complexity can be reduced. This is particularly applicable to a terminal device with a weak processing capability, such as an A-IoT terminal/IoT terminal. For example, in an application scenario, the first terminal device may be an A-IoT terminal/IoT terminal, or the first group of terminal devices are A-IoT terminals/IoT terminals. It can be learned from the foregoing descriptions that there are a plurality of grouping/classification manners of A-IoT terminals/IoT terminals in embodiments of this application. In terms of the paging process, compared with current paging for the conventional UE, with an example in which a group identifier carried in a paging message is obtained through classification based on MBS services, in this embodiment of this application, more types of A-IoT terminals/IoT terminals can be covered, to avoid a case in which one or some A-IoT terminals/IoT terminals cannot be paged.

For example, for the A-IoT terminal/IoT terminal, when the network device needs to page a terminal device or a group of terminal devices, the network device may obtain a group identifier based on the foregoing grouping/classification manner of A-IoT terminals/IoT terminals. For example, an ID of the first group of terminal devices is a filter corresponding to the first group of terminal devices. The network device may calculate, based on an ID of a group to which the A-IoT terminal/IoT terminal belongs, a PO for sending a paging message, and send the paging message on the calculated PO. Correspondingly, the terminal device calculates, based on the ID of the group to which the A-IoT terminal/IoT terminal belongs, a PO for sending the paging message, and receives the paging message on the calculated PO. Paging the first group of terminal devices is used as an example. The network device may determine a first PO, and send a paging message on the first PO. The first PO is used to page at least one terminal device, the paging message is used to page the first group of terminal devices, the first group of terminal devices are A-IoT terminal devices, and the paging message includes the identifier of the first group of terminal devices. The identifier of the first group of terminal devices may be a group identifier obtained in the foregoing grouping/classification manner of A-IoT terminals/IoT terminals. For example, the identifier of the first group of terminal devices is the filter corresponding to the first group of terminal devices.

Considering that a clock synchronization capability of the terminal device is weak, if the current paging manner for the conventional UE is used to calculate a PO for receiving a paging message in a time window, and then the paging message is received on the PO, the paging message from the network device may be missed. Therefore, in this embodiment of this application, the network device may send, on all POs in the first time window, the paging message used to page the first terminal device, and the first terminal device may continuously receive the paging message in the first time window, to avoid a case in which the first terminal device cannot respond to paging of the network device due to missing of the paging message of the first terminal device, and therefore access a network as early as possible. Alternatively, the first terminal device periodically receives the paging message in the first time window, to avoid missing the paging message of the first terminal device as much as possible, thereby reducing a network access delay and reducing energy consumption.

For example, the first paging occasion is a paging occasion of the first group of terminal devices, a second paging occasion is a paging occasion of a second group of terminal devices, and the network device may send paging messages on the first paging occasion and the second paging occasion. Both the paging message on the first paging occasion and the paging message on the second paging occasion include a first filter and a second filter, the first filter indicates the first group of terminal devices, and the second filter indicates a second group of terminal devices. Each terminal device may continuously or periodically detect, in the first time window, a paging message of the terminal device.

It should be noted that the first time window may alternatively be a PF. In this case, the first terminal device calculates a position of the PF based on a UE ID/filter/UE group ID in the paging manner for the conventional UE, to calculate a position of a PO in the PF, and receive a paging message at the calculated PO position. A difference lies in that the UE ID or the UE group ID carried in the paging message may be the ID obtained through grouping/classification of tags.

One time window may be used to page one group of terminal devices, or may be used to page a plurality of groups of terminal devices, to reduce a network access delay of each group of terminal devices as much as possible. For example, the paging message sent by the network device in the first time window is further used to page the second group of terminal devices, and each terminal device may receive the paging message in the corresponding time window. For example, the paging message sent by the network device in the first time window includes the identifier of the first group of terminal devices and an identifier of the second group of terminal devices (for example, referred to as a second group identifier). A terminal device belonging to the first group of terminal devices receives the paging message in the first time window, and a terminal device belonging to the second group of terminal devices receives the paging message in the first time window. Similar to the first group of terminal devices, the second group of terminal devices may also be A-IoT terminals. For example, FIG. 7 is a diagram in which a paging message in one time window carries a plurality of group identifiers. In FIG. 7, an example in which group identifiers included in a paging message in a time window n1 include a group identifier 1 and a group identifier 2 is used.

In an implementation, the network device may send different filters or group identifiers in different time windows within a cycle, or may send a same filter in different time windows. For example, the network device may send a first filter or group identifier in a time window 1 within a cycle, and send a second filter or group identifier in a time window 2 within the cycle. For another example, the network device may send a first filter in both a time window 1 and a time window 2 within a cycle. The time window 1 and the time window 2 may be any two different time windows within a first cycle.

Correspondingly, a terminal device may receive a paging message in a time window corresponding to a filter or group identifier to which the terminal device belongs.

In an implementation, the terminal device may receive the paging message in one or more time windows within a cycle. For example, the network device configures N time windows within a cycle T, and the terminal device selects m time windows in the N time windows configured by the network device, where m is greater than or equal to 1, N is greater than or equal to 1. The terminal device can receive the paging message in all the m time windows.

In another implementation, the terminal device may receive the paging message in one time window within a cycle. For example, the network device may configure a time position and a length of a time window used by the terminal device to receive the paging message within a cycle, and the terminal device receives the paging message in the time window. For another example, the network device may configure N time windows within a cycle T, and the terminal device selects an n^{th} time window from the N time windows to receive the paging message. For a determining manner of n, refer to related content in the manner B. Details are not described herein again.

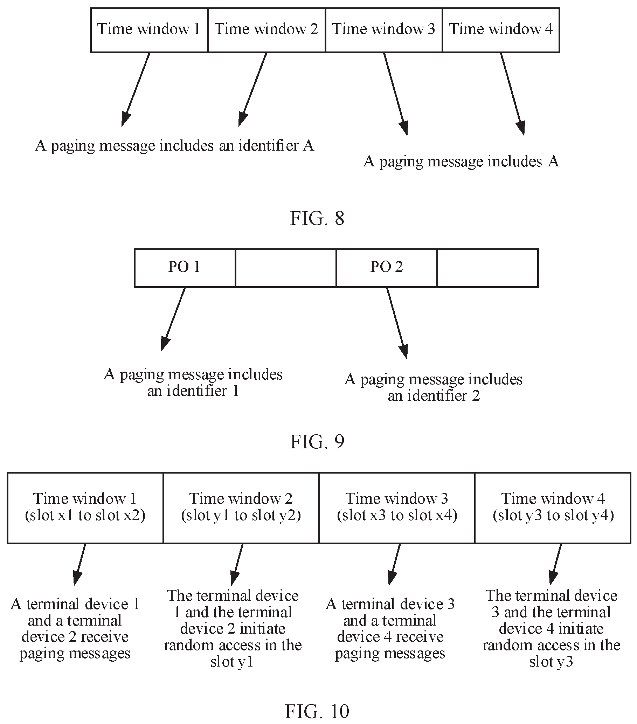

For example, if the network device needs to page a terminal device (for example, the first terminal device), but is uncertain about which group (for example, the first group of terminal devices) the first terminal device belongs to, the network device may send, in a plurality of time windows, a paging message for paging the first terminal device. For example, FIG. 8 is a diagram in which paging messages in a plurality of time windows carry a same identifier. FIG. 8 shows four time windows (a time window 1 to a time window 4), with paging a terminal device A as an example. It is assumed that the terminal device A belongs to a terminal device group B, and an identifier of the terminal device A is an identifier A. Because the network device is uncertain about which terminal device group the terminal device A belongs to, when the network device needs to page the terminal device A, to reduce a probability that the terminal device A cannot receive a paging message, the network device may send the paging message in all the four time windows, where the paging message includes the identifier A.

Certainly, if a terminal device (for example, the first terminal device) that needs to be paged by the network device belongs to a terminal device group (for example, the first group of terminal devices), the network device may calculate a PO of the first terminal device based on the identifier (for example, an ID or a corresponding filter) of the first group of terminal devices, and send a paging message on the PO, where the paging message includes the identifier of the first group of terminal devices. For example, FIG. 9 is a diagram of a plurality of POs in one time window. The time window in FIG. 9 may be a PF, or may be a cycle. In FIG. 9, an example in which the time window includes a PO 1 of a terminal device 1 and a PO 2 of a terminal device 2 is used. For example, the terminal device 1 belongs to a terminal device group 1, and the terminal device 2 belongs to a terminal device group 2. An identifier of the terminal device group 1 is an identifier 1, and an identifier of the terminal device group 2 is an identifier 2. When the network device needs to page the terminal device 1, the network device determines that the terminal device 1 belongs to the terminal device group 1, and the network device may send a paging message on the PO 1, where the paging message includes the identifier 1. When the network device needs to page the terminal device 2, the network device determines that the terminal device 2 belongs to the terminal device group 2, and the network device may send a paging message on the PO 2, where the paging message includes the identifier 2. Alternatively, the network device may send, within the PO 1 and a part of the duration of the PO 2, a paging message carrying the identifier 1; or the network device may send, within the PO 2 and a part of the duration of the PO 1, a paging message carrying the identifier 2.

In an implementation, the network device may page a terminal device group (for example, the first group of terminal devices) on all POs or in all time windows within a cycle. Alternatively, the network device sends, on each PO or in each time window within a cycle, a paging message carrying the identifier of the first group of terminal devices. The cycle herein may be a cycle T configured by the network device, or may be a DRX cycle or an eDRX cycle.

The terminal device initiates random access in response to the paging message of the network device. In an implementation, the terminal device selects a resource closest to a time window in which the paging message is received, to initiate random access. For example, FIG. 10 shows a plurality of time windows. The plurality of time windows include a time window 1 (including a slot x1 to a slot x2), a time window 2 (including a slot y1 to a slot y2), a time window 3 (including a slot x3 to a slot x4), and a time window 4 (including a slot y3 to a slot y4). The time window 1 is used to page the first group of terminal devices, and the time window 3 is used to page the second group of terminal devices. The time window 2 is closest to the time window 1. Terminal devices (for example, a terminal device 1 and a terminal device 2) that receive paging messages in the time window 1 initiate random access by using a resource in the time window 2, and the terminal devices that receive the paging messages in the time window 1 both initiate random access by using a resource (for example, the slot y1) that is in the time window 2 and that is close to the time window 1. Similarly, the time window 4 is closest to the time window 3. Terminal devices that receive paging messages in the time window 3 initiate random access by using a resource (for example, the slot y3) in the time window 4, and the terminal devices (for example, a terminal device 3 and a terminal device 4) that receive the paging messages in the time window 1 both initiate random access by using a resource that is in the time window 2 and that is close to the time window 1. In a scenario with massive A-IoT terminal devices, if a quantity of terminal devices paged in a same time period is large, a quantity of terminal devices that initiate random access on a same resource is large, causing random access resource congestion. The first group of terminal devices is used as an example. When a quantity of terminal devices in the first group of terminal devices is large, a quantity of terminal devices that initiate random access in the time window 2 is large, causing random access resource congestion in the time window 2. All terminal devices contend for initiating random access on a same resource, resulting in some terminal devices being delayed in accessing the network.

Therefore, in this embodiment of this application, the network device may indicate/configure, to each terminal device, a resource used for random access, to reduce random access resource congestion and reduce a network access delay of the terminal device. For example, the network device may further perform S403.

S403: The network device sends a random access parameter, where the random access parameter indicates an available random access resource.

The network device may indicate/configure, to each terminal device, a resource used for random access. Correspondingly, the first terminal device receives the random access parameter from the network device. The random access parameter indicates the available random access parameter, or the random access parameter indicates a random access resource. The network device indicates the random access resource. Compared with a case in which the terminal device selects, by default, a resource closest to a time window in which a paging message is received, to initiate random access, this can reduce random access resource congestion and reduce a network access delay of the terminal device.

Signaling carrying the random access parameter is not limited in embodiments of this application. For example, the random access parameter may be sent to the first terminal device together with the paging message sent by the network device to the first terminal device. If the random access parameter is included in the paging message sent to the first terminal device, S403 is the same as S402, that is, S403 does not exist, and the paging message in S402 includes the random access parameter. For another example, the network device may separately send the random access parameter to the first terminal device. The random access parameter may be carried in a system message, DCI, a broadcast message, a synchronization message, or the like. In this case, S403 is performed before S402.

The random access parameter may include one or more of the following: time domain resource information, frequency domain resource information, and code domain resource information. The time domain resource information indicates a time domain resource for random access, the frequency domain resource information indicates a frequency domain resource for random access, and the code domain resource information indicates a space domain resource for random access. The following separately describes the time domain resource information, the frequency domain resource information, and the code domain resource information.

**Time domain resource information:** For any terminal device or terminal device group, the time domain resource information may indicate a random access time window, a duration of the random access time window is a first duration, and there is a second offset between a time domain start position of the random access time window and a time domain end position of a time window in which the terminal device receives a paging message. Alternatively, there is a second offset between a time domain start position of the random access time window and a time domain start position of a time window in which the terminal device receives a paging message. Alternatively, there is a second offset between a time domain end position of the random access time window and a time domain start position of a time window in which the terminal device receives a paging message. Alternatively, there is a second offset between a time domain end position of the random access time window and a time domain end position of a time window in which the terminal device receives a paging message.

For example, the second offset may be predefined or (pre)configured. In this case, the time domain resource information may include first time information, and the first time information may indicate the first duration, that is, a duration of the random access resource. The first terminal device receives the paging message in the first time window, and may determine a time domain position of the random access resource based on the first time information in the time domain resource information and the second offset. For example, the first duration is a length of n subframes/slots, and the time domain resource information may include n.

For another example, the first duration may be predefined or (pre)configured, and the time domain resource information may include the second offset. The first terminal device receives the paging message, may determine a time domain start position of the random access resource based on the second offset, and then determine a time domain position of the random access resource based on the first duration. For example, the first duration is n subframes/slots, the second offset may be m subframes/slots, and the time domain resource information may include m. Alternatively, the time domain resource information may include the second offset and the first time information, which is more flexible.

Any terminal device may randomly select, in a random access time window, a resource for initiating random access. For example, the random access time window includes n subframes/slots. The first terminal device may generate a random number n1, and initiate random access in an (n1)^{th} subframe/slot in the n subframes/slots. A second terminal device may generate a random number n2, and initiate random access in an (n2)^{th} subframe/slot in the n subframes/slots. Alternatively, the network device schedules a resource for initiating random access by each terminal device in a random access time window. The foregoing example is still used. For the first terminal device, the network device may configure the first terminal device to initiate random access in the (n1)^{th} subframe/slot in the n subframes/slots. For the second terminal device, the network device may configure the first terminal device to initiate random access in the (n2)^{th} subframe/slot in the n subframes/slots.

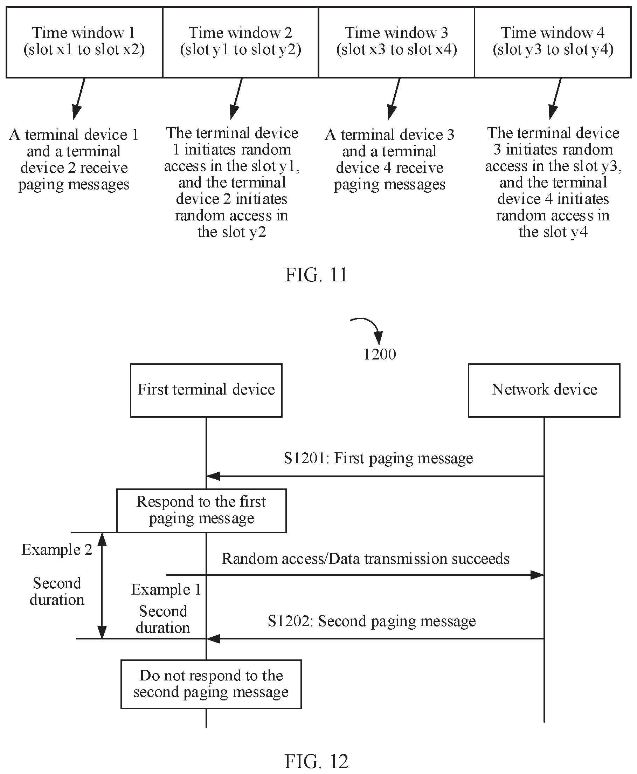

For ease of understanding, refer to FIG. 11. FIG. 11 shows a plurality of time windows. In FIG. 11, an example in which a time window 1 to a time window 4 are included is used. For related descriptions of the time window 1 to the time window 4 in FIG. 11, refer to the content in FIG. 10. For example, the first group of terminal devices include a terminal device 1 and a terminal device 2. According to the method in this embodiment of this application, the network device may configure the terminal device 1 to initiate random access by using a slot y1 in a time window 2, and the terminal device 2 to initiate random access by using a slot y2 in the time window 2. Similarly, the network device may configure the terminal device 3 to initiate random access by using a slot y3 in the time window 4, and the terminal device 4 to initiate random access by using a slot y4 in the time window 4. It can be learned that time for initiating random access by the terminal device 1 and time for initiating random access by the terminal device 2 are staggered, and time for initiating random access by the terminal device 3 and time for initiating random access by the terminal device 4 are staggered. The time window 2 is used as an example. Compared with FIG. 10, a quantity of terminal devices that initiate random access within a same duration (for example, the slot y1) in the time window 2 in FIG. 11 is smaller. Therefore, in this embodiment of this application, the network device configures, for each terminal device, a time domain resource for initiating random access, so that congestion can be reduced, and a network access delay of the terminal device can be reduced.

It may be understood that a longer length of a random access preamble indicates a larger bandwidth and a larger coverage area. A size of the coverage area may be represented by a coverage level. Correspondingly, a longer length of the random access preamble indicates a larger bandwidth and a higher coverage level. A time domain resource for random access may be allocated to the terminal device based on a coverage level requirement of the terminal device, so that random access time of different terminal devices is staggered.

In an implementation, different time corresponds to different coverage levels, or there is a mapping relationship between a coverage level and a time domain resource. For example, a coverage level 1 corresponds to T1, a coverage level 2 corresponds to T2, a coverage level 3 corresponds to T3, and so on. A time domain resource for random access by a terminal device whose coverage level is the coverage level 1 is T1, a time domain resource for random access by a terminal device whose coverage level is the coverage level 2 is T2, and a time domain resource for random access by a terminal device whose coverage level is the coverage level 3 is T3. Each terminal device may select a corresponding time domain resource for random access based on a coverage level of the terminal device to initiate random access.

A factor causing random access congestion may also include frequency domain resource congestion and/or space domain resource congestion. Therefore, the network device may further reduce congestion by configuring a frequency domain resource and/or a space domain resource used for random access, to reduce the network access delay of the terminal device. One or more of time domain resources for random access, frequency domain resources for random access, and code domain resources for random access corresponding to different terminal devices are different. Alternatively, one or more of time domain resources for random access, frequency domain resources for random access, and code domain resources for random access corresponding to different time windows used to detect a paging message are different.

**Frequency domain resource information:** The frequency domain resource information may indicate an offset between a frequency domain resource for random access and a preset frequency domain position, to determine the frequency domain resource for random access. For example, the frequency resource information includes position information of the frequency resource for random access. For example, the frequency resource for random access is a first frequency band, and the frequency domain resource information may include start position information and end position information of the first frequency band. For another example, the frequency domain resource information may include a third offset, and the third offset may be the offset between the frequency domain resource for random access and the preset frequency domain position. A preset frequency domain resource may be (pre)configured. The terminal device may randomly select a part of the frequency domain resource to initiate random access. For example, the frequency domain resource for random access includes P resource blocks (resource blocks, RBs). The first terminal device may generate a random number p1, and initiate random access by using a (p1)^{th} RB in the P RBs. The second terminal device may generate a random number p2, and initiate random access by using a (p2)^{th} RB in the P RBs. Therefore, random access is initiated in a staggered manner as much as possible. P, p1, and p2 are integers.

**Code domain resource information:** The code domain resource information may include information about a sequence used for random access, where the sequence may be a Zadoff-Chu (Zadoff-Chu, ZC) sequence. It may be understood that a random access preamble (preamble) set of a cell is obtained by performing cyclic shift on a ZC root sequence. A specific random access preamble set may be configured for a cell, and is used by a terminal device in a coverage area of the cell to access a network device in the cell. A random access preamble set of each cell may be formed by cyclic shifts of a plurality of (for example, 64) ZC sequences. Preambles may be orthogonal to each other, and different terminal devices may share a same time domain resource to send preambles. The preamble corresponds to an index (index) range, different indexes correspond to different ZC sequences, and each terminal device randomly selects an index to implement orthogonality between preambles. For example, the first terminal device randomly selects an index 1, and generates a preamble by using a sequence 1 corresponding to the index 1 to initiate random access; and the second terminal device randomly selects an index 2, and generates a preamble by using a sequence 2 corresponding to the index 2 to initiate random access.

In a possible scenario, one terminal device may be paged for a plurality of times in a period of time. For example, the network device needs to page a group of terminal devices, but not all terminal devices in the group of terminal devices are paged in a discontinuous reception cycle. The network device further pages the group of terminal devices in a next discontinuous cycle, and some terminal devices are paged in the two paging processes. For example, the group of terminal devices includes a terminal device 1 and a terminal device 2. In a first discontinuous reception cycle, if access of the terminal device 1 in a random access procedure fails, and random access of the terminal device 2 succeeds, the network device needs to page the terminal device 1 in a second discontinuous reception cycle. In this case, the terminal device 2 is still paged. However, for the terminal device 2, this time of paging is unnecessary, and causes extra power consumption.

Therefore, an embodiment of this application provides a paging method 1200. In the paging method 1200, a terminal device may not respond to or ignore a paging message in a time period, to reduce power consumption of the terminal device as much as possible.

FIG. 12 is a schematic flowchart of the paging method 1200 according to this embodiment of this application. In FIG. 4, the method is described from a perspective of interaction between a network device and a first terminal device. It should be understood that the paging method 1200 may alternatively be implemented by another apparatus, for example, a chip or a communication apparatus that has a communication function. As shown in FIG. 12, a procedure of the paging method 1200 includes the following steps.

S1201: The network device sends a first paging message to the first terminal device, where the first paging message is used to page a first group of terminal devices.

Correspondingly, the first terminal device receives the first paging message. The first paging message is used to page the first group of terminal devices, and the first paging message may include an identifier of the first group of terminal devices. The first terminal device belongs to the first group of terminal devices. When receiving the first paging message, the first terminal device determines, based on the identifier carried in the first paging message, to respond to the first paging message.

Considering that the network device may page the first terminal device for a plurality of times in a period of time, additional power consumption of the first terminal device is caused. Therefore, the first paging message further includes second time information, and the second time information may indicate to ignore a paging message that is received within time indicated by the second time information and that is with a same terminal device identifier; or the second indication information may indicate to reject responding to a paging message that is received within time indicated by the second time information and that is with a same terminal device identifier. The second time information may indicate a second duration. For example, the second time information includes a first start moment and the second duration; or the second time information includes a first start moment and a first end moment, and there is the second duration between the first start moment and the first end moment.

S1202: The network device sends a second paging message to the first terminal device, where the second paging message is used to page the first group of terminal devices.

That the first terminal device sequentially receives the first paging message and the second paging message is used as an example. Both the first paging message and the second paging message are used to page the first group of terminal devices. The first terminal device receives the first paging message, and responds to the first paging message. If the first terminal device receives the second paging message within the second duration, the first terminal device may reject responding to the second paging message. When the first terminal device receives a third paging message after the second duration, where the third paging message includes the identifier of the first group of terminal devices, and the first terminal device belongs to the first group of terminal devices, the first terminal device may respond to the third paging message. It should be noted that, rejecting responding to the second paging message may be understood as: ignoring the second paging message, or receiving the second paging message but discarding the second paging message, or receiving the second paging message but not initiating random access.

In an implementation, after responding to the first paging message, the first terminal device starts timing after data transmission between the first terminal device and the network device succeeds (as shown in an example 1 in FIG. 12). If receiving the second paging message within the second duration, the first terminal device ignores or rejects responding to the second paging message. Alternatively, the first terminal device starts timing after responding to the first paging message (as shown in an example 2 in FIG. 12). If receiving the second paging message within the second duration, the first terminal device ignores or rejects responding to the second paging message. That the first terminal device responds to the first paging message may also be considered as that the first terminal device randomly accesses the network device.

In a possible scenario, within the second duration, the network device further needs to page the first terminal device. If the first terminal device keeps ignoring or rejecting responding to the paging message that is received within the second duration and that is for paging the first terminal device, the first terminal device cannot meet an actual requirement of the network device within the second duration.

Therefore, if the network device expects the first terminal device to respond to the paging message that is for paging the first terminal device within the second duration, the second paging message may include a validity identifier. The validity identifier indicates whether the second paging message is valid, or the validity identifier indicates whether to respond to a received paging message with the same terminal device identifier. "Whether to respond to the received paging message with the same terminal device identifier" includes "whether to respond to the paging message that is received within the time indicated by the second time information and that is with the same terminal device identifier".

For example, the validity identifier of the second paging message may be 1-bit information, where a value of the one bit is "1", indicating that the second paging message is valid, and the first terminal device may respond to the received paging message with the same terminal device identifier. If the paging message includes the second time information, the first terminal device may respond to the paging message that is received within the time indicated by the second time information and that is with the same terminal device identifier. For example, the first terminal device receives and responds to the first paging message. If the first terminal device receives the second paging message within the subsequent second duration, and the second paging message includes the identifier of the first group of terminal devices and the validity identifier, when a value of the validity identifier is "1", the first terminal device responds to the second paging message. Correspondingly, a value of the one bit is "0", indicating that the second paging message is invalid, and the first terminal device rejects responding to the received paging message with the same terminal device identifier. If the paging message includes the second time information, the first terminal device may reject responding to the paging message that is received within the time indicated by the second time information and that is with the same terminal device identifier. When the first terminal device receives and responds to the first paging message, if the first terminal device receives the second paging message within the subsequent second duration, the second paging message includes the identifier of the first group of terminal devices and the validity identifier, and a value of the validity identifier is "0", the first terminal device responds to the second paging message.

Alternatively, the second paging message includes the validity identifier, indicating the first terminal device to respond to the received paging message with the same terminal device identifier. The second paging message does not include the validity identifier, indicating that the first terminal device does not need to respond to the received paging message with the same terminal device identifier. For example, when the first paging message includes the second time information, the first terminal device receives and responds to the first paging message. If the first terminal device receives the second paging message within the subsequent second duration, and the second paging message includes the identifier of the first group of terminal devices and the validity identifier, the first terminal device responds to the second paging message. When the first paging message includes the second time information, the first terminal device receives and responds to the first paging message. If the first terminal device receives the second paging message within the subsequent second duration, the second paging message includes the identifier of the first group of terminal devices, and the second paging message does not include the validity identifier, the first terminal device rejects responding to the second paging message.

Alternatively, the second paging message may indicate whether the second paging message is valid or invalid. In this case, the second paging message does not carry the validity identifier and/or the second time information, and may also indicate whether the second paging message is valid. For example, the second paging message is unselect signaling. When the network device expects the first terminal device to respond to the paging message for paging the first terminal device within the second duration, the second paging message does not include an identifier of the first terminal device and the second time information. When the network device does not expect the first terminal device to respond to the paging message for paging the first terminal device within the second duration, the second paging message includes the identifier of the first terminal device and the second time information. It should be noted that a specific name of the unselect signaling is not limited in embodiments of this application.

In an implementation, the second paging message may carry a UE ID, a filter, or a group identifier, to indicate a terminal or a terminal group that is not paged or not selected. For example, the second paging message carries a first UE ID. If an ID of a terminal device is the first UE ID, the terminal device does not respond to the second paging message. On the contrary, if the ID of the terminal device is not the first UE ID, the terminal device may respond to the second paging message. Similarly, if a filter or a group identifier corresponding to the terminal device is the filter or the group identifier carried in the second paging message, the terminal device does not respond to the second paging message.

In the paging method 1200, time information is carried in the paging message, so that a quantity of times that the terminal device responds to the paging message in a period of time can be reduced, thereby reducing power consumption of the terminal device.

Embodiments provided in embodiments of this application may be separately performed, or may be combined with each other. For example, the paging method 400 and the paging method 1200 may be combined with each other. In embodiments provided in this application, the method provided in embodiments of this application is described from a perspective of interaction between the first terminal device and the network device. Steps performed by the first terminal device may be implemented by different functional entities included in the first terminal device. Steps performed by the network device may be implemented by different functional entities included in the network device. For example, the network device may be in a CU-DU architecture, a CU may generate a paging message, and a DU may send the paging message. To implement functions in the method provided in embodiments of this application, the first terminal device and the network device may include a hardware structure and/or a software module, and implement the foregoing functions in a form of the hardware structure, the software module, or the hardware structure and the software module. Whether a function in the foregoing functions is performed by using the hardware structure, the software module, or the hardware structure and the software module depends on particular applications and design constraints of the technical solutions.

The following describes, with reference to the accompanying drawings, communication apparatuses for implementing the foregoing methods in embodiments of this application. Therefore, all the foregoing content may be used in the following embodiments. Repeated content is not described again.

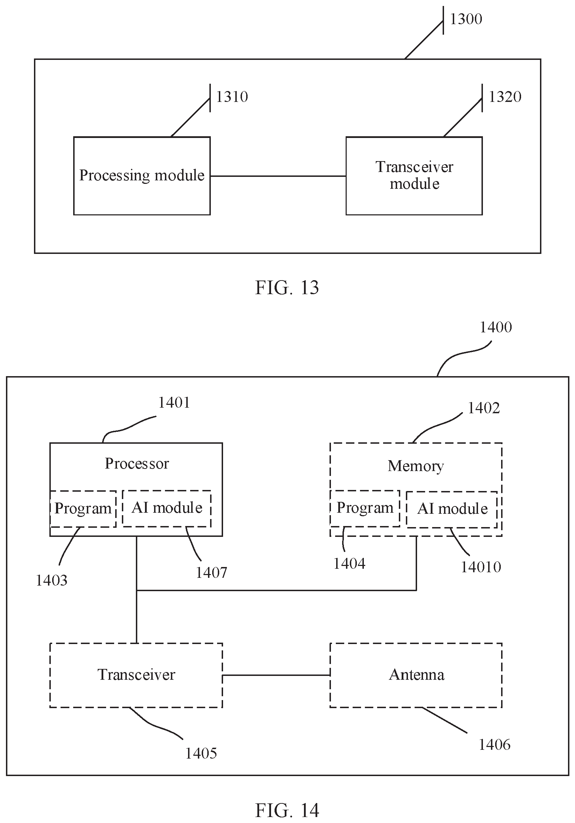

FIG. 13 is a block diagram of a communication apparatus 1300 according to an embodiment of this application. The communication apparatus 1300 may be the network device or the terminal device in the foregoing embodiments. For example, the communication apparatus 1300 may be the network device or the A-IoT terminal in FIG. 1. Alternatively, the communication apparatus 1300 is a chip (system) in the network device or a chip (system) in the terminal device. Alternatively, the communication apparatus 1300 is a software module in the network device or the terminal device. The communication apparatus 1300 may correspondingly implement functions or steps implemented by the terminal device or the network device in the method embodiments. The communication apparatus 1300 may include a processing module 1310 and a transceiver module 1320. Optionally, a storage module may be further included. The storage module may be configured to store instructions (code or a program) and/or data. The storage module may be, for example, a memory. The processing module 1310 and the transceiver module 1320 may be coupled to the storage module. For example, the processing module 1310 may read the instructions (the code or the program) and/or the data in the storage module, to implement the corresponding method. When the communication apparatus 1300 is a chip in the terminal device, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

In a possible implementation, the processing module 1310 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1320 is a transceiver, an interface circuit, a bus, a pin, or another possible communication interface, and is configured to receive a signal from another apparatus. For example, when the apparatus is implemented in a form of a chip, the transceiver module 1320 is an interface circuit that is of the chip and that is configured to receive a signal from another chip or apparatus, or is an interface circuit that is of the chip and that is configured to send a signal to another chip or apparatus.

In some possible implementations, the communication apparatus 1300 can correspondingly implement behavior and functions of the first terminal device in the method embodiments. The communication apparatus 1300 may be a terminal device, for example, an A-IoT terminal or a UE, may be a component (for example, a chip or a circuit) used in the terminal device, may be a chip or a chip group in the terminal device or a part of the chip that is configured to perform a related method function, or may be a software module that can implement the method performed by the first terminal device in the foregoing method (for example, the paging method 400 and/or the paging method 1200). This is not limited.

For example, the communication apparatus 1300 may implement the method performed by the first terminal device in the embodiment of FIG. 4 and/or the embodiment of FIG. 12. For example, the transceiver module 1320 may be configured to perform S402 in the embodiment of FIG. 4, and/or configured to support another process of the technology described in this specification. The processing module 1310 may be configured to perform S401 in the embodiment of FIG. 4, and/or configured to perform another process of the technology described in this specification.

In an implementation, the processing module 1310 is configured to determine a first time window, where the first time window is used to page at least one group of terminal devices; and the transceiver module 1320 is configured to receive a paging message in the first time window, where the paging message is used to page a first group of terminal devices, the first group of terminal devices are A-IoT terminals, and the paging message includes an identifier of the first group of terminal devices.

In another implementation, the processing module 1310 is configured to determine a first PO, where the first PO is used to page at least one group of terminal devices; and the transceiver module 1320 is configured to receive a paging message on the first PO, where the paging message is used to page a first group of terminal devices, the first group of terminal devices are A-IoT terminals, and the paging message includes an identifier of the first group of terminal devices.

In an optional implementation, the transceiver module 1320 is specifically configured to continuously or periodically receive the paging message in the first time window.

In an optional implementation, the transceiver module 1320 is further configured to receive configuration information, where the configuration information indicates the first time window.

In an optional implementation, the configuration information includes start position information of the first time window and/or duration information of the first time window within a cycle.

In an optional implementation, the configuration information includes a quantity N of time windows within a cycle, and N is an integer greater than or equal to 2.

In an optional implementation, the first time window is an n^{th} time window in the N time windows within the cycle, and n is an integer greater than or equal to 0.

In an optional implementation, the paging message is further used to page a second group of terminal devices, the second group of terminal devices are A-IoT terminals, and the paging message further includes an identifier of the second group of terminal devices.

In an optional implementation, the paging message includes a random access parameter, and the random access parameter indicates an available random access resource.

In an optional implementation, the random access parameter includes time domain resource information, where the time domain resource information includes a second offset and/or first time information, the second offset is used to determine a time domain start position of the random access resource, and the first time information indicates a duration of the random access resource; or the time domain resource information includes a coverage level, and there is a mapping relationship between the coverage level and a time domain resource of the random access resource.

In an optional implementation, the random access parameter includes frequency domain resource information, the frequency domain resource information includes position information of a frequency domain resource used for random access or a third offset, and the third offset is used to determine the frequency domain resource for random access.

In an optional implementation, the random access parameter includes code domain resource information, and the code domain resource information includes information about a sequence used for random access.

In an optional implementation, the paging message further includes second time information, and the second time information indicates to ignore a paging message that is received within time indicated by the second time information and that is with a same terminal device identifier.

In an optional implementation, the paging message further includes a validity identifier, and the validity identifier indicates whether to respond to a received paging message with the same terminal device identifier.

For example, the communication apparatus 1300 may implement the method performed by the network device in the embodiment of FIG. 4 and/or the embodiment of FIG. 12. For example, the transceiver module 1320 may be configured to perform S402 in the embodiment of FIG. 4, and/or configured to support another process of the technology described in this specification. The processing module 1310 may be configured to perform S401 in the embodiment of FIG. 4, and/or configured to perform another process of the technology described in this specification.

In an implementation, the processing module 1310 is configured to determine a first time window, where the first time window is used to page at least one group of terminal devices; and the transceiver module 1320 is configured to send a paging message in the first time window, where the paging message is used to page a first group of terminal devices, the first group of terminal devices are A-IoT terminals, and the paging message includes an identifier of the first group of terminal devices.

In another implementation, the processing module 1310 is configured to determine a first PO, where the first PO is used to page at least one group of terminal devices; and the transceiver module 1320 is configured to send a paging message on the first PO, where the paging message is used to page a first group of terminal devices, the first group of terminal devices are A-IoT terminals, and the paging message includes an identifier of the first group of terminal devices.

In an optional implementation, the transceiver module 1320 is further configured to send configuration information, where the configuration information indicates the first time window.

In an optional implementation, the configuration information includes start position information of the first time window and/or duration information of the first time window within a cycle.

In an optional implementation, the configuration information includes a quantity N of time windows within a cycle, and N is an integer greater than or equal to 2.

In an optional implementation, the paging message is further used to page a second group of terminal devices, the second group of terminal devices are A-IoT terminals, and the paging message further includes an identifier of the second group of terminal devices.

In an optional implementation, the paging message includes a random access parameter, and the random access parameter indicates an available random access resource.

In an optional implementation, the random access parameter includes time domain resource information, where the time domain resource information includes a second offset and/or first time information, the second offset is used to determine a time domain start position of the random access resource, and the first time information indicates a duration of the random access resource; or the time domain resource information includes a coverage level, and there is a mapping relationship between the coverage level and a time domain resource of the random access resource.

In an optional implementation, the random access parameter includes frequency domain resource information, the frequency domain resource information includes position information of a frequency domain resource used for random access or a third offset, and the third offset is used to determine the frequency domain resource for random access.

In an optional implementation, the random access parameter includes code domain resource information, and the code domain resource information includes information about a sequence used for random access.

In an optional implementation, the paging message further includes second time information, and the second time information indicates to ignore a paging message that is received within time indicated by the second time information and that is with a same terminal device identifier.

In an optional implementation, the paging message further includes a validity identifier, and the validity identifier indicates whether to respond to a received paging message with the same terminal device identifier.

When the communication apparatus 1300 is a chip-type apparatus or circuit, the transceiver module may be an input/output circuit and/or a communication interface, and the processing module is an integrated processor, a microprocessor, or an integrated circuit.

FIG. 14 is a block diagram of a communication apparatus 1400 according to an embodiment of this application. The communication apparatus 1400 may be the network device or the first terminal device in the foregoing embodiments. For example, the communication apparatus 1400 may be the network device or the A-IoT terminal in FIG. 1, or the communication apparatus 1400 is a chip (system) in the network device or the A-IoT terminal. In this embodiment of this application, the chip system may include a chip, or may include a chip and another discrete component. For a specific function, refer to descriptions in the method embodiments.

The communication apparatus 1400 includes one or more processors 1401, configured to implement or support the communication apparatus 1400 in implementing the function of the first terminal device or the network device in the method provided in embodiments of this application. For details, refer to detailed descriptions in the method example. Details are not described herein again. The processor 1401 may also be referred to as a processing unit or a processing module, and may implement a specific control function. The processor 1401 may be a general-purpose processor, a dedicated processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1400 (for example, a network apparatus or a terminal apparatus), execute a software program, and/or process data. Different processors may be independent components, or may be integrated into one or more processors, for example, integrated into one or more application-specific integrated circuits.

In a design, the processor 1401 may include a program 1403 (sometimes may also be referred to as code or instructions). The program 1403 may be run on the processor 1401, to enable the communication apparatus 1400 to perform the method described in the following embodiments. In another possible design, the communication apparatus 1400 includes a circuit (not shown in FIG. 14), and the circuit is configured to implement a function of the network device or the first terminal device in the foregoing embodiments.

In a design, the communication apparatus 1400 may include one or more memories 1402. The memory 1402 stores a program 1404 (sometimes may also be referred to as code or instructions), and the program 1404 may be run on the processor 1401, to enable the communication apparatus 1400 to perform the method described in the method embodiments, for example, the procedure shown in FIG. 4 and/or the procedure shown in FIG. 12.

In a design, the processor 1401 and/or the memory 1402 may include an artificial intelligence (artificial intelligence, AI) module 1407 and an AI module 14010. The AI module is configured to implement an AI-related function. The AI module may be implemented by software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1401 and/or the memory 1402 may further store data. The processor and the memory may be separately disposed, or may be integrated together.

In a possible design, the communication apparatus 1400 may further include a transceiver 1405 and/or an antenna 1406. The processor 1401 may sometimes also be referred to as a processing unit, and controls the communication apparatus 1400. The transceiver 1405 may sometimes also be referred to as a transceiver unit, a transceiver machine, a transceiver circuit, a transceiver, or the like, and is configured to implement a transceiver function of the communication apparatus through the antenna 1406.

In a possible design, the communication apparatus 1400 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1400 may include more or fewer components, or some components are integrated, or some components are split. These components may be implemented by hardware, software, or a combination of software and hardware.

The communication apparatus in the foregoing embodiments may be a terminal device (or a network device), may be a circuit, or may be a chip used in the terminal device (or the network device) or another combined device, component, or the like that has the terminal device (or the network device). When the communication apparatus is a terminal device (or a network device), the transceiver module may be a transceiver, and may include an antenna, a radio frequency circuit, and the like, and the processing module may be a processor, for example, a CPU. When the communication apparatus is a component having a function of a terminal device (or a network device), the transceiver module may be a radio frequency unit, and the processing module may be a processor. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the method embodiments. For another example, the interface circuit may alternatively be a signal transmission interface circuit between a communication processor and a transceiver.

An embodiment of this application further provides a communication system. Specifically, the communication system includes a network device and a terminal device. For example, the communication system includes a terminal device and a network device that are configured to implement related functions in FIG. 4. Alternatively, the communication system includes a terminal device and a network device that are configured to implement related functions in FIG. 12. Alternatively, the communication system includes a terminal device and a network device that are configured to implement related functions in FIG. 4 and FIG. 12. For details, refer to related descriptions in the method embodiments. Details are not described herein again.

An embodiment of this application further provides a computer-readable storage medium, including instructions. When the instructions are run on a computer, the computer is enabled to perform the method performed by the first terminal device or the network device in FIG. 4 and/or FIG. 12.

An embodiment of this application further provides a computer program product, including instructions. When the instructions are run on a computer, the computer is enabled to perform the method performed by the first terminal device or the network device in FIG. 4 and/or FIG. 12.

An embodiment of this application provides a chip system. The chip system includes a processor, may further include a memory, and is configured to implement a function of the terminal apparatus or the network apparatus in the foregoing methods. The chip system may include a chip, or may include a chip and another discrete component.

To implement functions of the communication apparatuses in FIG. 13 and FIG. 14, an embodiment of this application further provides a chip, including a processor, configured to support the communication apparatus in implementing a function of the terminal device or the network device in the method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

In embodiments of this application, "when", "in case", and "if" mean that an apparatus performs corresponding processing in an objective situation, and are not intended to limit time. The terms do not mean that the apparatus is required to have a determining action during implementation, and do not mean any other limitation. Unless otherwise specified, "if" and "in case" are interchangeable, and "when" and "in a case of" are interchangeable. "When" and "if"/"in case" are interchangeable.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first group of terminal devices and a second group of terminal devices refer to two different terminal device groups, and do not indicate different content, priorities, importance, or the like of the two terminal device groups. For a type of technical feature, technical features in the type of technical feature are distinguished by using "A", "B", "C", "D", and the like, and there is no sequence or order between the technical features described by "A", "B", "C", and "D". For example, a manner A and a manner B in this specification are merely intended to distinguish between different conjugate processing manners, and do not limit a sequence or order, and priorities, importance, or the like of the manner A and the manner B.

A person of ordinary skill in the art may be aware that, illustrative logical blocks (illustrative logical blocks) and steps (steps) described with reference to embodiments disclosed in this specification can be implemented by electronic hardware, computer software, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for instructing a computer device (which may be a personal computer, a server, a network device, or the like) to perform all or some steps of the method in embodiments of this application. The foregoing storage medium includes any medium, for example, a USB flash drive, a removable hard disk, a read-only memory (read-only memory, ROM), a RAM, a magnetic disk, or an optical disc, that can store program code.

Clearly, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A paging method, comprising:
determining a first time window, wherein the first time window is used to page at least one group of terminal devices; and
receiving a paging message in the first time window, wherein the paging message is used to page a first group of terminal devices, the first group of terminal devices are ambient internet of things A-IoT terminals, and the paging message comprises an identifier of the first group of terminal devices.

2. The method according to claim 1, wherein receiving the paging message in the first time window comprises:
continuously or periodically receiving the paging message in the first time window.

3. The method according to claim 1 or 2, wherein the method further comprises:
receiving configuration information, wherein the configuration information indicates the first time window.

4. The method according to claim 3, wherein the configuration information comprises start position information of the first time window and/or duration information of the first time window within a cycle.

5. The method according to claim 3, wherein the configuration information comprises a quantity N of time windows within a cycle, and N is an integer greater than or equal to 2.

6. The method according to claim 5, wherein the first time window is an n^{th} time window in the N time windows within the cycle, and n is an integer greater than or equal to 0.

7. The method according to any one of claims 1 to 6, wherein the paging message is further used to page a second group of terminal devices, the second group of terminal devices are A-IoT terminals, and the paging message further comprises an identifier of the second group of terminal devices.

8. The method according to any one of claims 1 to 7, wherein the paging message further comprises a random access parameter, and the random access parameter indicates an available random access resource.

9. The method according to claim 8, wherein the random access parameter comprises time domain resource information, wherein
the time domain resource information comprises a second offset and/or first time information, the second offset is used to determine a time domain start position of the random access resource, and the first time information indicates a duration of the random access resource; or
the time domain resource information comprises a coverage level, and there is a mapping relationship between the coverage level and a time domain resource of the random access resource.

10. The method according to claim 8 or 9, wherein the random access parameter comprises frequency domain resource information, the frequency domain resource information comprises position information of a frequency domain resource used for random access or a third offset, and the third offset is used to determine the frequency domain resource for random access.

11. The method according to any one of claims 8 to 10, wherein the random access parameter comprises code domain resource information, and the code domain resource information comprises information about a sequence used for random access.

12. The method according to any one of claims 1 to **11,** wherein the paging message further comprises second time information, and the second time information indicates to ignore a paging message that is received within time indicated by the second time information and that is with a same terminal device identifier.

13. The method according to any one of claims 1 to 12, wherein the paging message further comprises a validity identifier, and the validity identifier indicates whether to respond to a received paging message with the same terminal device identifier.

14. A paging method, comprising:
determining a first time window, wherein the first time window is used to page at least one group of terminal devices; and
sending a paging message in the first time window, wherein the paging message is used to page a first group of terminal devices, the first group of terminal devices are ambient internet of things A-IoT terminals, and the paging message comprises an identifier of the first group of terminal devices.

15. A paging method, comprising:
determining a first paging occasion PO, wherein the first PO is used to page at least one group of terminal devices; and
sending a paging message on the first PO, wherein the paging message is used to page a first group of terminal devices, the first group of terminal devices are ambient internet of things A-IoT terminals, and the paging message comprises an identifier of the first group of terminal devices.

16. The method according to claim 15, wherein the method further comprises:
sending configuration information, wherein the configuration information indicates the first time window.

17. The method according to claim 16, wherein the configuration information comprises start position information of the first time window and/or duration information of the first time window within a cycle.

18. The method according to claim 16, wherein the configuration information comprises a quantity N of time windows within a cycle, and N is an integer greater than or equal to 2.

19. The method according to any one of claims 14 and 16 to 18, wherein the paging message is further used to page a second group of terminal devices, the second group of terminal devices are A-IoT terminals, and the paging message further comprises an identifier of the second group of terminal devices.

20. The method according to any one of claims 14 and 16 to 19, wherein the paging message further comprises a random access parameter, and the random access parameter indicates an available random access resource.

21. The method according to claim 20, wherein the random access parameter comprises time domain resource information, wherein
the time domain resource information comprises a second offset and/or first time information, the second offset is used to determine a time domain start position of the random access resource, and the first time information indicates a duration of the random access resource; or
the time domain resource information comprises a coverage level, and there is a mapping relationship between the coverage level and a time domain resource of the random access resource.

22. The method according to claim 20 or 21, wherein the random access parameter comprises frequency domain resource information, the frequency domain resource information comprises position information of a frequency domain resource used for random access or a third offset, and the third offset is used to determine the frequency domain resource for random access.

23. The method according to any one of claims 20 to 22, wherein the random access parameter comprises code domain resource information, and the code domain resource information comprises information about a sequence used for random access.

24. The method according to any one of claims 14 to 23, wherein the paging message further comprises second time information, and the second time information indicates to ignore a paging message that is received within time indicated by the second time information and that is with a same terminal device identifier.

25. The method according to any one of claims 14 to 24, wherein the paging message further comprises a validity identifier, and the validity identifier indicates whether to respond to a received paging message with the same terminal device identifier.

26. A communication apparatus, comprising:
a processing module, configured to determine a first time window, wherein the first time window is used to page at least one group of terminal devices; and
a transceiver module, configured to receive a paging message in the first time window, wherein the paging message is used to page a first group of terminal devices, the first group of terminal devices are ambient internet of things A-IoT terminals, and the paging message comprises an identifier of the first group of terminal devices.

27. The apparatus according to claim 26, wherein receiving the paging message in the first time window comprises:
continuously or periodically receiving the paging message in the first time window.

28. The apparatus according to claim 26 or 27, wherein the transceiver module is further configured to:
receive configuration information, wherein the configuration information indicates the first time window.

29. The apparatus according to claim 28, wherein the configuration information comprises start position information of the first time window and/or duration information of the first time window within a cycle.

30. The apparatus according to claim 28, wherein the configuration information comprises a quantity N of time windows within a cycle, and N is an integer greater than or equal to 2.

31. The apparatus according to claim 30, wherein the first time window is an n^{th} time window in the N time windows within the cycle, and n is an integer greater than or equal to 0.

32. The apparatus according to any one of claims 26 to 31, wherein the paging message is further used to page a second group of terminal devices, the second group of terminal devices are A-IoT terminals, and the paging message further comprises an identifier of the second group of terminal devices.

33. The apparatus according to any one of claims 26 to 32, wherein the paging message further comprises a random access parameter, and the random access parameter indicates an available random access resource.

34. The apparatus according to claim 33, wherein the random access parameter comprises time domain resource information, wherein
the time domain resource information comprises a second offset and/or first time information, the second offset is used to determine a time domain start position of the random access resource, and the first time information indicates a duration of the random access resource; or
the time domain resource information comprises a coverage level, and there is a mapping relationship between the coverage level and a time domain resource of the random access resource.

35. The apparatus according to claim 33 or 34, wherein the random access parameter comprises frequency domain resource information, the frequency domain resource information comprises position information of a frequency domain resource used for random access or a third offset, and the third offset is used to determine the frequency domain resource for random access.

36. The apparatus according to any one of claims 33 to 35, wherein the random access parameter comprises code domain resource information, and the code domain resource information comprises information about a sequence used for random access.

37. The apparatus according to any one of claims 26 to 36, wherein the paging message further comprises second time information, and the second time information indicates to ignore a paging message that is received within time indicated by the second time information and that is with a same terminal device identifier.

38. The apparatus according to any one of claims 26 to 37, wherein the paging message further comprises a validity identifier, and the validity identifier indicates whether to respond to a received paging message with the same terminal device identifier.

39. A paging apparatus, comprising:
a processing module, configured to determine a first time window, wherein the first time window is used to page at least one group of terminal devices; and
a transceiver module, configured to send a paging message in the first time window, wherein the paging message is used to page a first group of terminal devices, the first group of terminal devices are ambient internet of things A-IoT terminals, and the paging message comprises an identifier of the first group of terminal devices.

40. A paging apparatus, comprising:
a processing module, configured to determine a first paging occasion PO, wherein the first PO is used to page at least one group of terminal devices; and
a transceiver module, configured to send a paging message on the first PO, wherein the paging message is used to page a first group of terminal devices, the first group of terminal devices are ambient internet of things A-IoT terminals, and the paging message comprises an identifier of the first group of terminal devices.

41. The apparatus according to claim 40, wherein the transceiver module is further configured to:
send configuration information, wherein the configuration information indicates the first time window.

42. The apparatus according to claim 41, wherein the configuration information comprises start position information of the first time window and/or duration information of the first time window within a cycle.

43. The apparatus according to claim 42, wherein the configuration information comprises a quantity N of time windows within a cycle, and N is an integer greater than or equal to 2.

44. The apparatus according to any one of claims 39, 42, and 43, wherein the paging message is further used to page a second group of terminal devices, the second group of terminal devices are A-IoT terminals, and the paging message further comprises an identifier of the second group of terminal devices.

45. The apparatus according to any one of claims 39 and 42 to 44, wherein the paging message further comprises a random access parameter, and the random access parameter indicates an available random access resource.

46. The apparatus according to claim 45, wherein the random access parameter comprises time domain resource information, wherein
the time domain resource information comprises a second offset and/or first time information, the second offset is used to determine a time domain start position of the random access resource, and the first time information indicates a duration of the random access resource; or
the time domain resource information comprises a coverage level, and there is a mapping relationship between the coverage level and a time domain resource of the random access resource.

47. The apparatus according to claim 45 or 46, wherein the random access parameter comprises frequency domain resource information, the frequency domain resource information comprises position information of a frequency domain resource used for random access or a third offset, and the third offset is used to determine the frequency domain resource for random access.

48. The apparatus according to claim 46 or 47, wherein the random access parameter comprises code domain resource information, and the code domain resource information comprises information about a sequence used for random access.

49. The apparatus according to any one of claims 46 to 48, wherein the paging message further comprises second time information, and the second time information indicates to ignore a paging message that is received within time indicated by the second time information and that is with a same terminal device identifier.

50. The apparatus according to any one of claims 46 to 49, wherein the paging message further comprises a validity identifier, and the validity identifier indicates whether to respond to a received paging message with the same terminal device identifier.

51. A communication apparatus, comprising a processor, wherein the processor is configured to execute one or more computer programs or instructions, so that the method according to any one of claims 1 to 13 is performed by the communication apparatus, or the method according to any one of claims 14 to 25 is performed by the communication apparatus.

52. A communication system, comprising a first communication apparatus and a second communication apparatus, wherein the first communication apparatus is configured to perform the method according to any one of claims 1 to 13, and the second communication apparatus is configured to perform the method according to any one of claims 14 and 16 to 25.

53. A computer-readable storage medium, storing a computer program or instructions, wherein the computer program or the instructions are used to implement the method according to any one of claims 1 to 13, or are used to implement the method according to any one of claims 14 to 25.

54. A computer program product, wherein the computer program product comprises a computer program, and when the computer program is run on a computer, the method according to any one of claims 1 to 13 is performed by the computer, or the method according to any one of claims 14 to 25 is performed by the computer.
